(19) Europäisches Patentamt
European Patent Office
Office européen des brevets

(11) **EP 3 264 668 B1**

(12) **EUROPEAN PATENT SPECIFICATION**

(45) Date of publication and mention of the grant of the patent:
**27.07.2022 Bulletin 2022/30**

(21) Application number: **16176721.5**

(22) Date of filing: **28.06.2016**

(51) International Patent Classification (IPC):
**H04L 9/00** *(2022.01)*

(52) Cooperative Patent Classification (CPC):
**H04L 9/003; G09C 1/00;** H04L 2209/046; H04L 2209/12

(54) **A PROTECTION METHOD AND DEVICE AGAINST A SIDE-CHANNEL ANALYSIS**

SCHUTZVERFAHREN UND VORRICHTUNG GEGEN EINE SEITENKANALANALYSE

PROCÉDÉ ET DISPOSITIF DE PROTECTION CONTRE UNE ANALYSE DE CANAUX AUXILIAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.01.2018 Bulletin 2018/01**

(73) Proprietor: **ESHARD**
**33650 Martillac (FR)**

(72) Inventors:
• **WURCKER, Antoine**
**33140 Villenave d'Ornon (FR)**
• **THIEBEAULD DE LA CROUEE, Hugues**
**33600 Pessac (FR)**

(74) Representative: **Marchand, André et al**
**OMNIPAT**
**24 Place des Martyrs de la Résistance**
**13100 Aix-en-Provence (FR)**

(56) References cited:
WO-A1-01/08012    US-A1- 2006 056 622
US-A1- 2009 074 181    US-A1- 2011 055 591
US-A1- 2012 250 854

EP 3 264 668 B1

**Description**

TECHNICAL FIELD

The present invention relates to a method and device for protecting a circuit or a program against side channel analysis aiming to discover the value of a secret data handled by the circuit or program, and in particular a secret key used by an encryption or decryption algorithm to transform a message.

The present invention relates in particular to smart card integrated circuits or to hardware cryptographic components integrated onto mother boards of computers and other electronic and IT equipment (USB drives, TV decoders, game consoles, etc.) implementing a cryptographic algorithm such as AES (Advanced Encryption Standard) or DES (Data Encryption Standard). The present invention also relates to a program implementing such an algorithm, provided for being executed in a secure or non-secured environment.

More generally the present invention relates to circuits and software implementing a permutation operation permuting bits of a data which is required to be kept hidden.

BACKGROUND

Circuits implementing cryptographic algorithms can comprise a central processing unit (CPU), and possibly a circuit dedicated to cryptographic computing, for example a cryptographic coprocessor. These circuits comprise thousands of logic gates that switch differently according to the operations executed. These switches create short variations in current consumption, for example of a few nanoseconds, and those variations can be measured. In particular, CMOS-type integrated circuits comprise logic gates that only consume current when they switch, i.e. when a logic node changes its state to 1 or to 0. Therefore, the current consumption depends on the data handled by the central processing unit and on its various peripherals: memory, data flowing on the data or address bus, cryptographic coprocessor, etc.

Furthermore, certain software programs using encryption or obfuscation techniques, such as the White-box Cryptography technique, may integrate secret data in such a way that it is very difficult to determine them by reverse engineering. Certain software programs may also receive a secret data from outside through a secure communication channel.

Such circuits may be subjected to so-called side channel analysis attacks based on observing their current consumption, or their magnetic or electromagnetic radiation. Such attacks aim to discover secret data, in particular encryption keys. Current side channel attacks implement statistical analysis methods such as SPA ("Single Power Analysis"), DPA ("Differential Power Analysis"), CPA ("Correlation Power Analysis") or EMA ("ElectroMagnetic Analysis"). The SPA analysis (ref. [1]) normally only requires the acquisition of a single current consumption trace. It aims to obtain information about the activity of the integrated circuit by observing the part of the consumption trace corresponding to a cryptographic computation, since the current trace varies according to the operations executed and the data handled.

Software may also undergo such side channel attacks during their execution by a circuit.

DPA (ref. [2]) and CPA analyses enable the key of an encryption algorithm to be found by acquiring numerous circuit consumption traces and by statistically analyzing these traces to find the target information. They are based on the premise that the consumption of a CMOS-type integrated circuit varies when a bit changes from 0 to 1 in a register or on a bus, and does not vary when a bit remains equal to 0, remains equal to 1 or changes from 1 to 0 (discharge of a stray capacitance of a MOS transistor). Alternatively, it can be considered that the consumption of a CMOS-type integrated circuit varies when a bit changes from 0 to 1 or changes from 1 to 0 and does not vary when a bit remains equal to 0 or remains equal to 1. This second hypothesis enables the conventional "Hamming distance" or "Hamming weight" functions to be used in order to develop a consumption model that does not require knowledge of the structure of the integrated circuit in order to be applicable. The DPA analysis involves amplifying this consumption difference thanks to statistical processing on numerous consumption traces, aiming to highlight a measurement difference between two families of consumption traces distinguished according to formulated hypotheses.

The CPA analysis (ref. [3]) is based on a linear current consumption model and involves computing a correlation coefficient between, firstly, the consumption points measured that form the captured consumption traces and, secondly, an estimated consumption value, computed from the linear consumption model and a hypothesis on the data to be discovered that is handled by the microcircuit and on the value of the encryption key.

The electromagnetic analysis (EMA) is based on the principle that an integrated circuit may send information in the form of near or far field electromagnetic radiation. Given that transistors emit electromagnetic signals when their state changes, these signals can be treated like the current consumption variation signals by an analysis such as one or other of the SPA, DPA and CPA analyses. An example of application of this analysis was made by Jean-Jacques Quisquater in 2001 (ref [4]).

Other side channel analyses exist, such as "Template analysis" (ref. [5]) and "Mutual Information Analysis" (MIA) (ref. [6]). All of the above-mentioned analyses are based on a time alignment of all the analyzed traces. In other words, all the measurements performed at a given time, for example from the time the execution of a command is activated by the circuit, must correspond to the same data handled by the algorithm.

The patent application N° FR16 51443 filed on February 22, 2016 by the Applicant discloses a method for analysing traces representative of the activity of a circuit when the latter executes an operation successively on different input data. This method comprises extracting a part of each trace, and generating a histogram from each extracted trace part, by counting an occurrence number of each possible value appearing in each of the extracted parts of these traces. Partial results of the operation are then computed by applying the operation to each input data and each possible value of a part of a secret key involved in the operation. Then, the method identifies for each possible part value of the secret key, all the input data which provide the same partial result. For each possible part value of the secret key, the occurrence numbers in the histograms, corresponding to the identified input data and the part value of the secret key are then added. The part of the secret key can be determined by subjecting the added occurrence numbers to a statistical analysis. The statistical analysis assumes that if a value related to the secret key has leaked in the extracted parts of the traces, it can be highlighted by the added occurrence numbers.

The patent application US 20069/056622 discloses a countermeasure for protecting the execution of an encryption algorithm by applying the algorithm to the data to be encrypted combined with masks by an XOR type function. The patent application US 2009/074181 discloses performing an operation on each possible value of one byte stored in a table including a requested input value, such as a cryptographic key, and another input value. The result of the operation is stored in an output table including all possible values of one byte. As providing all possible values of an output data, with a same probability, the operation is protected against analyses of information leakage during computations. However, this countermeasure is not adapted to a permutation operation as generally not providing all possible values of an output data, with a same The patent application US 2011/055591 discloses a countermeasure to side channel attacks based on masking.

It may be desirable to propose a protection for an integrated circuit or a software program against one or more of these side channel analyses. In particular, it may be desirable to propose a protection for a bit permutation operation, as those involved in the DES algorithm.

SUMMARY

A method is described for executing a requested operation by a circuit, the method comprising: generating an input mask set comprising input mask parameters; generating an input set comprising data resulting from the combination of an input data of the requested operation with each input mask parameter of the input mask set by Exclusive OR (XOR) operations; and providing as a result of the requested operation an output set comprising data resulting from the application of the requested operation to each data in the input set. According to the invention, the requested operation is a bit permutation operation whereby bits of the input data are mixed to obtain an output data comprising at least two words, the input mask set comprising one word column per word of the input data, each word column of the input mask set comprising a same number of occurrences of all possible values of one input data word in relation to a size of the input data words, each data in the output set corresponding with a respective input mask parameter of the input mask set and being equal to a corresponding output mask parameter belonging to an output mask set, combined by XOR operations with an output data resulting from the application of the requested operation to the input data, each output mask parameter being equal to the application of the requested operation to the corresponding input mask parameter, the input mask set being generated to fulfill the condition that the output mask set comprises columns of output mask words, each output mask word column comprising a same number of occurrences of all possible values of the output words in relation to a size of the output words, the condition being fulfilled when each of the words of each mask parameter in the output mask set comprises less than twice a same bit rank from the words of one word column of the input mask set.

According to an embodiment, the generation of the first mask set comprises: generating a first word column of the first mask set, comprising a single occurrence of all possible values of a word of the first word column in relation to a size of the word of the first word column; and computing each other column of the first mask set by applying a respective bit permutation function to each of the words of the first column, the bit permutation functions being defined such that the application of the requested operation to each mask parameter in the input mask set produces output mask words each comprising less than twice a same bit rank from the words of the first word column.

According to an embodiment, the input word column of the mask set is randomly generated.

According to an embodiment, the bit permutation operation comprises duplicating bits of the input data.

Embodiments may also relate to a method for encrypting or decrypting an input data according to a cryptographic algorithm comprising a bit permutation operation, wherein the bit permutation operation is performed according to the above-defined method.

According to an embodiment, the cryptographic algorithm conforms with the Data Encryption Standard (DES) algorithm, the bit permutation operation comprising a DES reverse permutation operation combined with a DES bit expansion operation.

According to an embodiment, the cryptographic algorithm conforms with the Data Encryption Standard (DES) algorithm and comprises successively: a first bit permutation operation comprising a DES bit expansion operation, and performed using the first mask set, a substitution operation performed using masked substitution tables, each substitution table using as an input mask one mask parameter of the first mask set transformed by the first bit permutation operation, and as an output mask, a corresponding mask parameter of a second mask set, transformed by a second bit permutation operation, and the second bit permutation operation which comprises a DES round permutation operation, and being performed using the second mask set, the first mask set being generated such that an output set of the first bit permutation operation comprises columns of words, each column comprising a same number of occurrences of all possible values of the output set words in relation to a size of the output set words, the second mask set being generated such that: when combined by XOR operations with respective first masks of the first mask set, the second mask set provides a mask output set wherein each columns of the output set comprises a single occurrence of all possible values of a word of the mask output word column in relation to a size of the word of the masked output word column, and an inverse of the second bit permutation operation provides an output set comprising columns of words, each column comprising a same number of occurrences of all possible values of one output set word in relation to a size of the output set word.

According to an embodiment, the generation of the first and second mask sets comprises: generating a first word column of the first mask set, comprising a single occurrence of all possible values of a word of the first word column in relation to a size of the word of the first word column; computing a first word columns of the second mask set, by applying a first function to the first word column of the first mask set; computing each other column of the first mask set and the second mask set, by applying respective second bit permutation functions to each of the words of the first column of the first mask set, and of the first column of the second mask set, the bit permutation functions being defined such that: the first bit permutation operation applied to the first mask set, provides a first mask output set comprising columns of words, each comprising a same number of occurrences of all possible values of one word of the first mask output set column in relation to the size of the word of the first mask output set column, the second bit permutation operation applied to the second mask set, provides a second mask output set comprising columns of words, each comprising a same number of occurrences of all possible values of one word of the second mask output set column in relation to the size of the word of second mask output set column, a combination by XOR operations of each word column of the first mask set with a respective word column of the second mask set, provides a resultant column comprising a single occurrence of all possible values of one word of the resultant column in relation to a size of the word of the resultant column.

According to an embodiment, the method comprises an operation combining by XOR operations a first and a second round data to provide a round output data, the operation being applied to combine each data of a first round set including the first round data, with each data of a second round set comprising the second round data at a same rank, the first and second round sets comprising word columns, each word column comprising a same number of occurrences of all possible values of one word of the word column in relation to the size of the word of the word column, an output set of the operation being arranged in rows and columns, each row or column comprising output data resulting from the application of the operation to a same one data of one of the first or second input set and to all data of the other of the first and second input set, the method comprising selecting a data column of the output set comprising the round output data, the data column comprising word output columns, each output column comprising a same number of occurrences of all possible values of one word of the word output column, in relation to the size of the word in the word output column.

Embodiments may also relate to a circuit comprising a processor and configured to implement the methods as above defined.
one circuit performing a substitution operation for each masked substitution table.

According to an embodiment, the circuit comprises a coprocessor.

Embodiments may also relate to a device comprising the above-defined circuit, arranged on a medium.

Embodiments may also relate to a computer program product loadable into a computer memory and comprising code portions which, when carried out by a computer, configure the computer to carry out the steps of the above-defined methods.

BRIEF DESCRIPTION OF THE DRAWINGS

The method and/or device may be better understood with reference to the following drawings and description. Non-limiting and non-exhaustive descriptions are described with the following drawings. In the figures, like referenced signs may refer to like parts throughout the different figures unless otherwise specified.

Figure 1 represents a conventional architecture of a secure circuit;
Figure 2 is a flow-chart of protection steps transforming an input data according to one embodiment;
Figure 3 is a block diagram illustrating protection steps, according to an embodiment;
Figure 4 is a block diagram illustrating an operation performed by the circuit of Figure 2;
Figure 5 is a block diagram of the DES encryption algorithm, including protection steps according to one embodiment;

Figures 6 to 8 are tables used in the DES encryption algorithm of Figure 5;
Figure 9 is a flow-chart of protection steps transforming an input data according to another embodiment;
Figure 10 is a block diagram of an intermediary data set obtained when executing the DES algorithm, according to one embodiment;
Figure 11 is a block diagram illustrating operations of the DES algorithm, according to one embodiment;
Figure 12 is a block diagram illustrating an operation of the DES algorithm, according to one embodiment;
Figure 13 is a block diagram of a circuit protected according to one embodiment;
Figure 14 is a block diagram of the DES encryption algorithm, including protection steps according to another embodiment;
Figure 15 is a flowchart of a method for generating a protected substitution table, according to one embodiment;
Figure 16 is a flowchart of an XOR operation protected according to one embodiment;
Figures 17 and 18 are blocks diagrams representing a circuit implementing the DES encryption algorithm, according to different embodiments;
Figure 19 is a block diagram representing a secure circuit, according to another embodiment.

## DETAILED DESCRIPTION

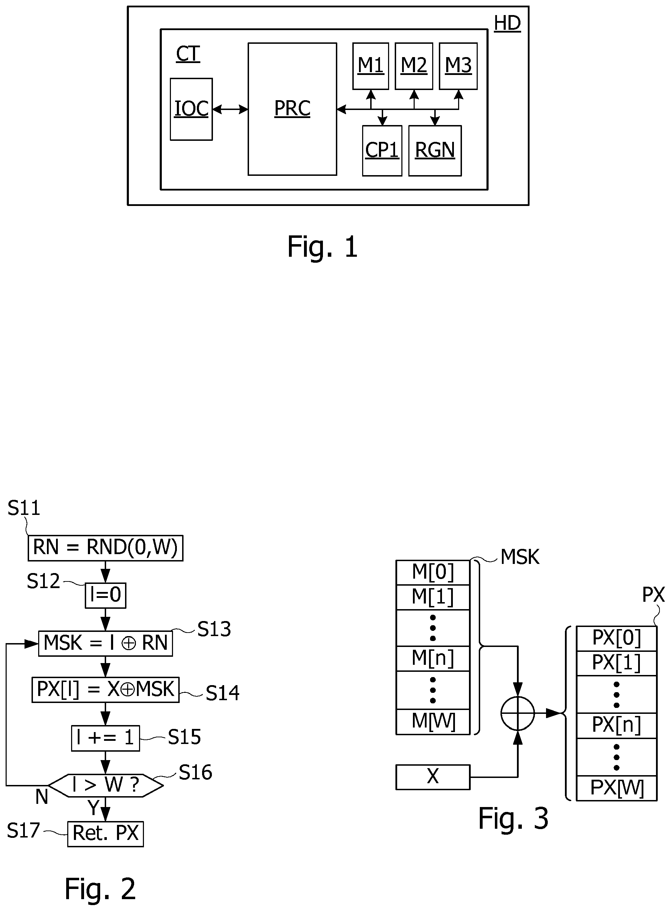

Figure 1 represents, as an example, a secure integrated circuit CT, for example arranged on a portable medium HD such as a plastic card or any other medium, or in a terminal such as a mobile terminal. The integrated circuit comprises a microprocessor PRC, an input/output circuit IOC, memories M1, M2, M3 coupled to the microprocessor by a data and address bus and, optionally, a cryptographic computation coprocessor CP1 or arithmetic accelerator, and a random number generator RGN. The memories can comprise a volatile memory M1, for example a RAM-type ("Random Access Memory") memory containing volatile application data, a non-volatile a non-volatile memory M2, for example an EEPROM or Flash memory, containing non-volatile data and application programs, and possibly a read-only memory M3 (or ROM memory) containing the operating system of the microprocessor. The operating system can be also stored in the non-volatile memory M2.

The communication interface circuit IOC may be of contact type, for example according to the ISO/IEC 7816 standard, of contactless type with inductive coupling, for example according to the ISO/IEC 14443A/B or ISO/IEC 13693 standard, of contactless type by electrical coupling (UHF interface circuit), or of both contact and contactless type. The interface circuit IOC may also be coupled through a specific interface, to another circuit such as an NFC controller, or a main circuit of a terminal such as a mobile terminal or a connected object.

In some embodiments, the integrated circuit CT may be configured to execute operations of encrypting, decrypting or signing messages that are sent to it, by means of a cryptographic function. This cryptographic function may be executed by the processor PRC of the circuit CT or partially or totally carried out by the processor PRC to the coprocessor CP1.

It is proposed here to protect an operation, e.g. an operation in a cryptographic algorithm against side channel analysis. In this context, the operation receives an input data, and provides an output data as a function of the value of the input data. A protection according to one embodiment involves executing the operation to be protected for all the data of an input set comprising the input data required to be processed by the operation, each data in the input set comprising at least one first word, the first words in the input set having a same size and forming a word subset comprising a same number of occurrences of all of the possible values of the first words in relation with the word size. Another protection involves providing as result of the operation an output set comprising the expected output data, each data in the output set comprising at least one first word having the same size, the first words in the output set forming a word subset comprising a same number of occurrences of all of the possible values of the first words in relation with the size of the word.

Unlike the protections of prior art involving hiding the operation to be protected in a flood of identical operations applied to random data and thus uncorrelated from the required input data of the operation to be protected, the idea here is to execute the operation on other data not chosen randomly. Indeed, such other data are correlated to the required input data insofar as the input set formed of such other data and of the required data to be processed, is such that each data in the input set comprises at least one first word, the first words having the same size and forming a word subset comprising the same number of occurrences of all possible values of the first words having the size of the data susceptible of being processed by the operation. Of course the input data to be processed by the operation should have an unpredictable position in the input set, but known by the circuit performing the operation.

The input set may be obtained by combining the required input data X by a logical XOR (Exclusive OR) operation with a mask MI comprising for example a value equal to I representing a byte having all possible values of one byte (between 0 and 255). Thus if the input data X has the size of one byte, the input set comprises 256 data equal to $X \oplus MI$ where MI = 0 to 255, and the required input data $X = PX[n] = X \oplus Mn$, with Mn = 0 ("$\oplus$" representing the Exclusive OR (XOR) operator applied to bytes). When the input data is encoded on one byte, an operation can be protected according to one embodiment by applying the operation to all the data in the input set comprising the data PX[I+1] = X ⊕ MI, with I = 0 to 255, i.e. all possible data having the size of one byte. The computations of the output data in the output set may be performed in a random order. To this purpose, the data in the input set can be arranged in a random order.

Figure 2 represents steps S11 to S17 of a procedure for generating an input set PX comprising an input data X, according to one embodiment. Steps S11 to S16 are executed successively. In step S11, a variable RN receives a random value between 0 and a maximum value W determined according to the size defined by the number of bits used to encode the input data X in binary code. Thus, for a variable RN encoded on b bits, the maximum value W equals $2^b-1$. If the variable RN is encoded on 8 bits, the value W equals 255, and if the variable RN is encoded on 16 bits, the value W equals 65535. In step S12, an index I is set to 0. In step S13, a variable MSK (= I ⊕ RN) is computed by applying XOR operations to the index I and to the variable RN. In step S14, an input data PX[I] designated by the index I in a table forming the input set PX is computed by applying XOR operations to the input data X, and to the variable MSK. Figure 3 represents the input data X, the different values M0 (=0⊕RN), M1 (=1 ⊕ RN), ... MW (=W ⊕ RN) of the variable MSK and the different data PX[0], PX[1]), ... PX[W] of the input set PX.

In step S15, the index I is incremented by one (1). In step S16, the index I is compared with the maximum value W, and if it is greater than the value W, step S17 is executed, otherwise a new iteration of the calculation is executed in steps S13 to S16. In step S17, the table PX is provided as an output of the procedure S11-S17, the expected input data being in the table PX at an index n (X = PX[n]), this index n having a value such that the variable Mn = 0. Indeed, the result of XOR operations applied to data D and 0 does not transform the data D.

It shall be noted that values of the variable MSK can be processed in a random order and not necessarily in the order from 0⊕RN to W⊕RN. Several operations can be applied to the input set PX to compute an output set. The expected output data can be extracted at a known index n from an output set at a subsequent step in the processing, for example considered less sensitive to side channel analysis.

Further, the input data X can be encoded on several binary words having a same number of bits. Each value given to the variable MSK also has the same number of bits as each of the words in the data X. If the data is encoded on one byte (8-bit words), the variable MSK can be also encoded on 8 bits. The number of iterations W+1 that must be executed between steps S13 to S16 is equal to $2^b$, b being the size in number of bits of the data X. If the data X is encoded on one word of 16, 32 or 64 bits, it may be desirable to limit this number of iterations. If the operations applied to the input data are performed byte per byte, the variable MSK may be encoded on 8 bits, and the variable MSK can be combined with the input data X at step S14 by concatenating the variable MSK with itself several times to form a word of the size of the input data X. Therefore, in the event that the data X is encoded on 16 bits, the variable MSK encoded on 8 bits can be concatenated with itself to obtain a word on 16 bits. The operation executed in step S14 then becomes:

$$PX[I] = X \oplus MSK//MSK, \hspace{3cm} (1)$$

"//" representing the concatenation operator of binary words. In the event that the data X is encoded on 32 bits, each value of the variable MSK encoded on 8 bits is concatenated with itself three times to obtain a word on 32 bits. The operation executed in step S14 then becomes:

$$PX[I] = X \oplus MSK//MSK//MSK//MSK. \hspace{2.5cm} (2)$$

In fact, the variable MSK used as a mask can have the size of the words processed by the considered operation in the algorithm.

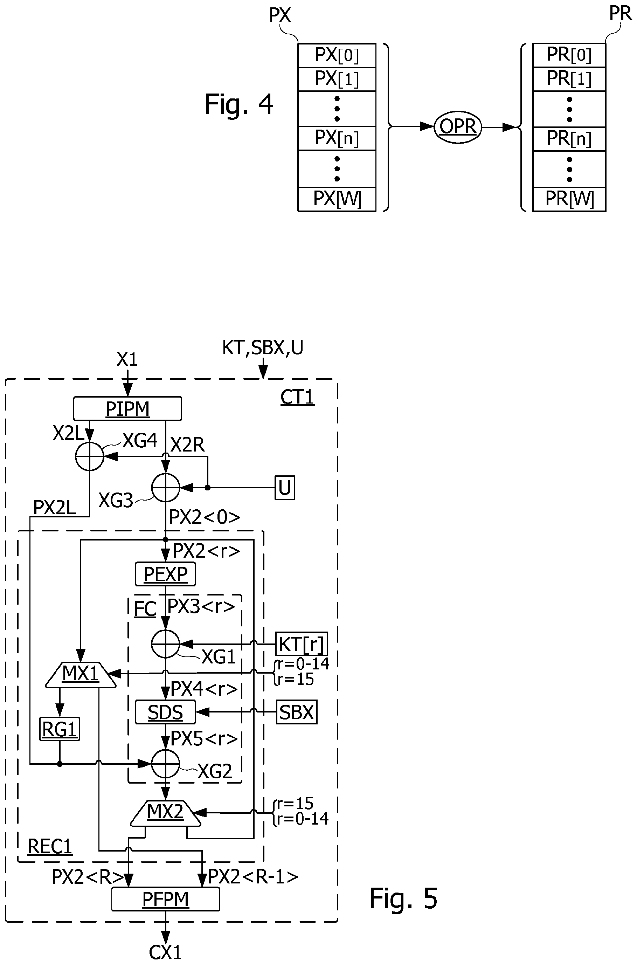

Figure 4 illustrates application of an operation OPR to a protected data X in the form of an input set PX, which can be obtained using the procedure of Figure 2, the data X having the size of one or several words. Thus the data X is represented by an input set PX comprising data PX[0], PX[2], ... PX[W], each of these data having the same size as the input data X. The required input data X is at index n in the input set PX: X = PX[n], n being an integer number between 0 and W. The result of the operation is an output set PR comprising W+1 output data PR[0], PR[1], ... PR[W], wherein each data PR[I] equals OPR(PX[I]). The expected output data OPR(X) is equal to the output data PR[n] located at the same index n in the output set PR. Each data in the output set PR can be expressed as follows:

$$PR[I] = OPR(PX[I]) = OPR(X \oplus IM[I]) = OPR(X) \oplus OM[I], \hspace{1cm} (3)$$

for each index I between 0 and W, in which IM is an input mask set, OM is an output mask set of several words such that OM[I] = OPR(IM[I]) for each index I between 0 and W, each mask set IM, OM comprising W+1 mask parameters IM[I], OM[I],

It turns out that such a protection is efficient when each word column of the output set PR comprises the same number of occurrences of all possible values of one word, in relation to the size of one word thereof. For this purpose, each of the mask sets IM and OM should comprise mask parameters, each comprising at least one word arranged in a word column in the mask set and comprising one word from each mask parameter of the mask set, the words in one word column of the mask sets IM and OM having the same size and comprising the same number of occurrences of all possible values of the words in relation with the word size. It further turns out that if the input mask set has this property, the bit permutation operations, expansive or not, do not generally transmit this property to the output mask set.

According to an embodiment, this property can be transmitted to the output mask set by choosing particular input mask parameters IM[I]. Such input mask parameters can be determined by the following method.

The output mask set OM is defined such that:

$$OM[I] = OPR(IM[I]), \tag{4}$$

for each index I between 0 and W. Each mask parameter IM[I] is formed of m words IMi[I] of k bits (i = 1 to m):

$$IM[I] = IM1[I]//IM2[I]//\ldots//IMm[I]$$

with IMi = ib[i,x1]//ib[i,x2]//...//ib[i,xk], ib[i,xj] representing a bit number xj of the word IMi, and xj≠xj' for each possible distinct values of j and j', and each index value i between 1 and m, IMi generically representing any value IMi[I]. Each mask parameter OM[I] is formed of m' words OMj of k' bits (i = 1 to m'):

$$OM[I] = OM1[I]//OM2[I]//\ldots//OMm'[I]$$

with OMi = ob[i,x1]//ob[i,x2]//...//ob[i,xk'], ob[i,xj] representing a bit number xj of the word OMi, and xj≠xj' for each possible distinct values of j and j', and each index value i between 1 and m', OMi generically representing any value OMi[I].

The equation (4) can be translated into a set of equations between the bits of the mask parameters words IMi and OMi' using the definition of the bit permutation operation. Solutions in the form of equalities between each of the bits of the words OMi' and one the bits of the words IMi, verifying the above rules between the bits of the words IMi, OMi', can be determined by testing hypotheses.

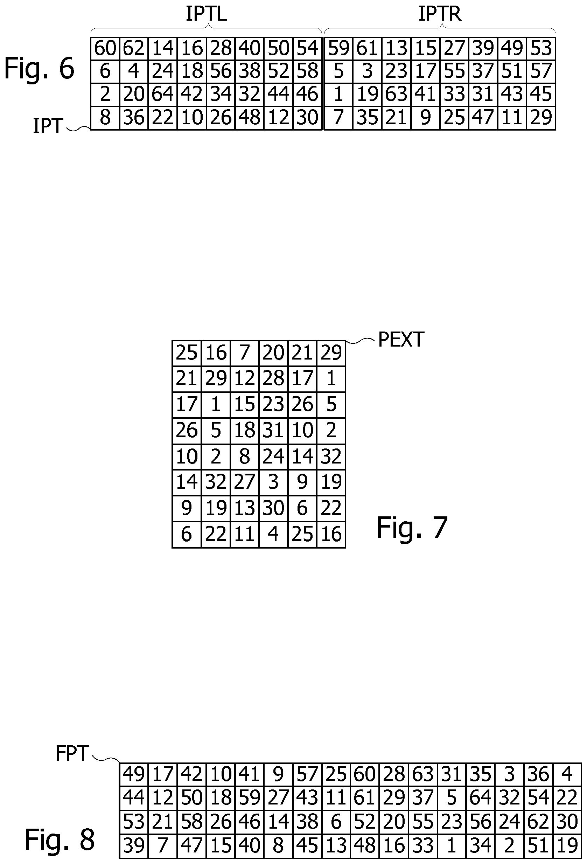

It is desirable to apply the above-described method to bit permutation operations of the DES (Data Encryption Standard) algorithm either implemented by software or in hardware. Figure 5 represents an example of a cryptographic calculation circuit CT1 implementing the DES algorithm for encrypting a data. For further details about the DES, the document "Data Encryption Standard (DES) FIPS PUB 46-3" published on 25th October 1999 can be referred to. In Figure 5, the cryptographic calculation circuit CT1 receives a data X1 to be processed and supplies a resultant data CX1. The circuit CT1 also receives a round key table KT containing all round keys derived from a secret key according to the DES algorithm, and DES substitution tables SBX. The circuit CT1 comprises an initial permutation circuit PIPM, a final permutation circuit PFPM, and a main encryption circuit REC1 comprising circuits XG1, XG2 performing XOR operations, an expansion circuit PEXP, a substitute calculation circuit SDS, one register RG1, and multiplexers MX1, MX2. The input data X1 which is encoded on a 64-bit word is applied to the initial permutation circuit PIPM. The circuit PIPM performs the DES initial permutation operation combined with the DES reverse round permutation operation, which can be defined using a single table IPT shown in Figure 6. The result of the operation performed by the circuit PIPM is divided into a left and a right 32-bit word. The table IPT comprises a left part IPTL and a right part IPTR. Each table part IPTL, IPTR gives the position in the input data X1 of each of the bits of the output left and right 32-bit words, the bits in the input data being numbered from 1 to 64. Each table part IPTL, IPTR comprises four lines of eight bits, each line giving the value of a byte of the output left or right 32-bit word. For example, the first (left) byte of the left output word comprises the bit numbers, successively 60, 62, 14, 16, 28, 40, 50 and 54 of the input data X1.

The left word is transmitted to the circuit XG2. The right word is transmitted to the circuit PEXP and the multiplexer MX1 which has one output connected to the register RG1 and one output connected to a right input of the circuit PFPM. The register RG1 is connected to one input of the circuit XG2. The circuit PEXP performs a combination of the DES round permutation operation and the DES expansion operation, using a single table PEXT shown in Figure 7. The circuit PEXP receives a 32-bit data and provides a 48-bit data formed of eight 6-bit words to the circuit XG1. Each line of the table PEXT gives the position in the 32-bit word in input of the circuit PEXP of each bit of a respective one of eight 6-bit words in output of the circuit PEXP. For example, the first left 6-bit word of the output data of the circuit PEXP if formed with the bit numbers, successively, 25, 16, 7, 20, 21 and 29 of the 32-bit word provided to the circuit PEXP (numbered from 1 to 32).

The circuit XG1 combines the 48-bit word in output of the circuit PEXP with a first round key KT[0] also encoded on 48 bits, by XOR operations. The result of the operation performed by the circuit XG1 is processed by the substitute calculation circuit SDS which provides a 32 bit word using the eight DES substitution tables SBX. Each 6-bit word in input of the circuit SDS is used as an index to select a 4-bit word in a respective one of the eight substitution tables SBX. Thus, the circuit SDS provides eight 4-bit words, forming a 32-bit data which is combined with the 32-bit data in the register RG1, by the circuit XG2 applying XOR operations. The result provided by the circuit XG2 is transmitted to the multiplexer MX2 having one output connected to the circuit PEXP and the multiplexer MX1, and one output connected to a left input of the circuit PFPM. The circuit PFPM performs the DES round permutation operation and the DES final permutation operation, using a single table FPT shown in Figure 8. The circuit PFPM provides a 64-bit word CX1. The table FPT gives the position in the words in input of the circuit PFPM of each of the bits of the 64-bit output data CX1, the bits of the left 32-bit word provided to the circuit PFPM being numbered from 1 to 32, and the bits of the right 32-bit word provided to the circuit PFPM being numbered from 33 to 64. For example, the first (left) byte of the output data CX1 comprises the bit numbers, successively, n° 49, 17, 42, 10, 41, 9, 57 and 25 of the 64-bit data provided to the circuit PFPM.

At a first calculation round according to the DES algorithm, a right 32-bit word (R0) in output of the circuit PIPM is stored in the register RG1 and processed by the circuit PEXP, and then successively by the circuit XG1, and SDS, and provided to the circuit XG2. The left 32-bit word (L0) in output of the circuit PIPM is transmitted to the circuit XG2. The right word (R0) is transferred by the multiplexer MX1 to the register RG1. The word (R1) in output of the circuit XG2 is transmitted by the multiplexer MX2 to the circuit PEXP for a new calculation round, and to the multiplexer MX1 for a next round. At a second calculation round, the word R1 is processed by the circuits PEXP, XG1, SDS, and XG2, the circuit XG2 receiving the word (R0) from the register RG1.

At a 16th and last round, a word (R14) in the register RG1 is combined with an output of the circuit SDS by the circuit XG2 which provides a word (R16) to the multiplexer MX2 which transmits it as a most significant word to the left input of the final permutation circuit PFPM. At the same time, the word R15 (=L16) is provided by the multiplexer MX1 as a least significant word to the right input of the circuit PFPM which outputs the output data CX1.

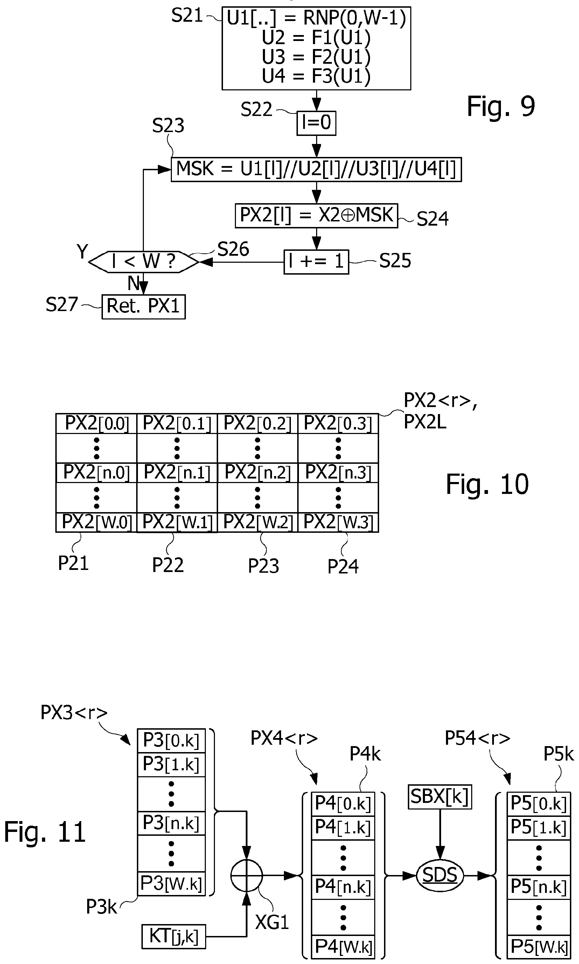

According to an embodiment, the circuit CT1 receives a mask set U, and comprises circuits XG3, XG4 performing XOR operations with mask parameters U[I] from the mask set U. The circuits XG3, XG4 process the data X2L, X2R received from the circuit PIPM to provide two data sets PX2L, PX2R (=PX2<0>) by executing steps S21 to S27 of Figure 9. The steps S22 and S24 to S27 are the same as the steps S12 and steps S14 to S17. At step S21, a random permutation U1 is generated, the permutation U1 comprising all the 256 byte values (between 0 and 255) in a random order. Permutations U2, U3 and U4 are further generated by respectively applying functions F1, F2, F3 to the permutation U1. At step S23, the mask value MSK can be generated by concatenating the bit strings U1[I], U2[I], U3[I] and U4[I], where Ui[I] is a byte of rank I in the permutation Ui, and i = 1, 2, 3 and 4. Thus, at step S24, each of the 32-bit right and left words X2R, X2L is combined with a 32-bit word formed as follows:

$$PX2[I] = X2 \oplus U1[I]//U2[I]//U3[I]//U4[I]. \qquad (5)$$

with X2 = X2R (or X2L) and PX2 = PX2R (resp. PX2L).

As shown in Figure 10, each output set PX2R (=PX2<0>), PX2L comprises W+1 (= 256) 32-bit words PX2[I], or four columns P21, P22, P23, P24 of W+1 bytes, each column comprising a single occurrence of each possible value of one byte, and in particular, one occurrence of the output datum X2R, X2L at a row n, n being such that U1[n] = 0. Since the mask word sets U2, U3 and U4 are derived from mask word set U1 by applying functions (F1, F2, F3), U2[n] = U3[n] = U4[n] = 0.

As shown in Figure 11, the circuit PEXP provides an output set PX3<0> comprising eight (8) columns P3k (k = 0 to 7) of W+1 6-bit words P3[I.k] (I = 0 to W). Thanks to the above-definition of the mask table U, each column P3k of the output set PX3<0> comprises four (4) occurrences of each possible value encoded on six bits ($4 \times 2^6 = 256$). Thus the use of the mask table U enables the protection of an expansive bit permutation operation such as the one performed by the circuit PEXP.

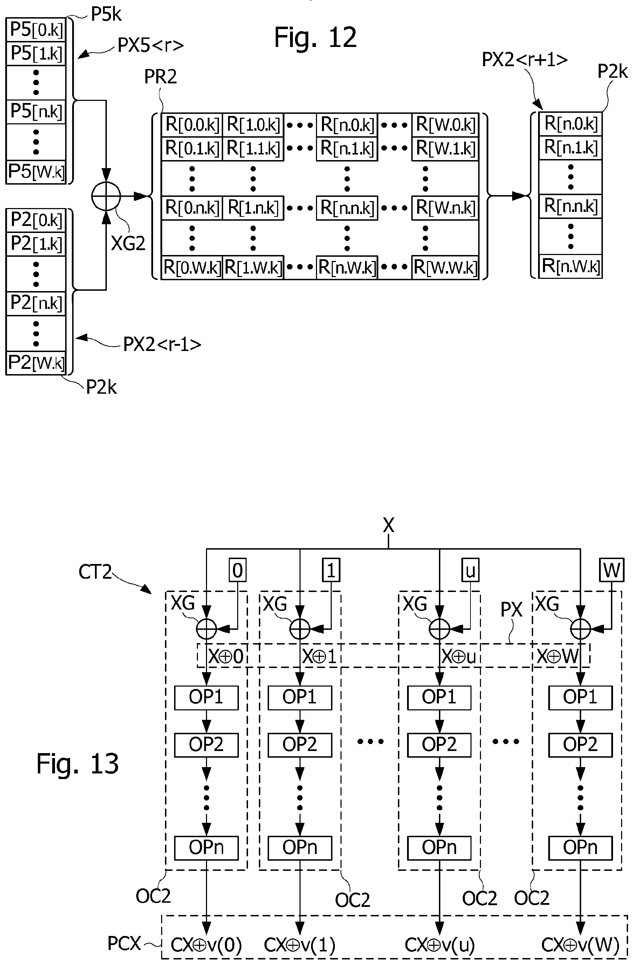

According to an embodiment, a circuit FC comprising the circuits XG1, SDS and XG2 successively processes each column P3k, one after the other, as illustrated in Figures 11 and 12. In Figure 11, the circuit XG1 combines each 6-bit word P3[I.k] (I = 0 to W=255) of the column P3k with a respective part KT[r,k], of 6 bits of the 48-bit round key KT[r], and provides a column P4k of the output set PX4<0> of W+1 6-bit words P4[I.k], comprising four (4) occurrences of each possible value encoded on six (6) bits ($4 \times 2^6 = 256$). The substitution operation performed by the circuit SDS is carried out with all the 6-bit words P4[I.k] in the column PX4k of the set PX4<0> using a respective DES substitution table SBX[k]. Each 6-bit word P4[I.k] in the column P4k is used as an index to select a 4-bit word P5[I.k] in the DES substitution table SBX[k]. The circuit SBS provides a column P5k of the output set PX5<0> comprising W+1 4-bit words P5[k.I] (I = 0 to W), and sixteen (16) occurrences (16 × 2⁴ = 256) of each possible value encoded on four bits.

The circuit XG2 performs XOR operations between each 32-bit word P5[I1.k] in the column P5k of the output set PX5<r> (computed at round r) and each 32-bit word P2[I2.k] in the column P2k of the output set PX2<r-1>, (I1 = 0 to W and I2 = 0 to W). As illustrated in Figure 12, the result of the XOR operations forms a table PR2 comprising (W+1)(W+1) 4-bit words R[0.0.k] to R[W.W.k], where each 4-bit word R[I1.I2.k] is computed as follows:

$$R[I1.I2.k] = P5[I1.k] \oplus P2[I2.k], \qquad\qquad (6)$$

with P2[I2.k] representing the 4-bit words of the column P2k of the set PX2L at round r = 0, and of the set PX2<r-1 > at other rounds r = 1 to 15.

Thanks to the choice of the permutations U1, U2, U3, U4, each column R[I.k] (I = 0 to W) of the output table PR2 comprises W+1 4-bit words and 16 occurrences of all possible values of one 4-bit word. In addition, the expected output 4-bit word remains at the same rank (row and column numbers) n of the input data X1 in the input set PX1, n being such that Ui[n]=0, with i = I, 2, 3 and 4.

According to an embodiment, the column R[n.k] comprising all data R[n,I2,k] is extracted from the table PR2 to be stored as the column P2k of the output set PX2<r+1> provided by the circuit XG2. Thus the extracted column R[n.k] comprises all data P5[n.k]⊕P2[I2.k], Therefore, the masks parameters coming from the output set PX5<r> and transformed by the substitution operation are removed, and only the masks parameters U coming from the output set PX2<r-1> remain.

Then a next column P2k of the set PX2<r+1> is computed by the circuits XG1, SDS and XG2, until all columns P2k (k = 1 to 8) are processed, such that the output set PX2<r+1> is completely defined. Since only the mask parameters U coming from the output set PX2<r-1> remain in the resultant set PX2<r+1>, the latter comprises W+1 32-bit words or four (4) columns of W+1 bytes, each byte column comprising one occurrence of each possible byte value.

It can be observed that processing of the columns P2k are independent from each other and can be performed in any order, provided that the order of the operations applied to each column is respected.

At the last round R, the circuit PFPM receives two output sets PX2<R> and PX2<R-1>. The circuit PFPM provides the 64-bit output data CX1 by selecting the output data PX2<R>[n] and PX2<R-1>[n] at the index n in the output sets PX2<R> and PX2<R-1> and by applying the DES round permutation and the DES final permutation to the selected data. It can be observed that the mask parameters U[i] are kept throughout the operations performed by the circuits PEXP and FC, thanks to the choice of the extracted column in the output set PR2. In addition, a fault injection can be detected by combining each data PX2<R>[I] and PX2<R-1>[I] of the output sets PX2<R> and PX2<R-1> with the respective mask parameters U[I] and by detecting a resultant data different from the others.

The permutations U1, U2, U3, U4 can be generated such that the 48-bit word provided by the circuit PEXP applied to each of the words U[I] = U1[I]//U2[I]//U3[I]//U4[I] (I = 0 to W) comprises eight six-bit words, each comprising only once bits of the words U1[I], U2[I], U3[I], U4[I]. When this condition is met, each 6-bit word column of the set provided by the circuit PEXP applied to each of the words U1[I]//U2[I]//U3[I]//U4[I] comprises four (4) occurrences of each possible value encoded on six bits. For example, let us choose U1[I] = U2[I] = U3[I] = U4[I] = b0//b1//b2//b3//b4//b5//b6//b7. The circuit PEXP receiving the 32-bit word U1[I]//U2[I]//U3[I]//U4[I] provides the following 6-bit words:

b0//b7//b6//b3//b4//b4 which contains twice the bit b4,
b4//b4//b3//b3//b0//b0 which contains twice the bits b0, b3 and b4,
b0//b0//b6//b6//b1//b4 which contains twice the bits b0 and b6,
b1//b4//b1//b6//b1//b1 which contains four times the bit b1,
b1//b1//b7//b7//b5//b7 which contains twice the bit b1 and three times the bit b7,
b5//b7//b2//b2//b0//b2 which contains three times the bit b2,
b0//b2//b4//b5//b5//b5 which contains three times the bit b5,
b5//b5//b2//b3//b0//b7 which contains twice the bit b5.

Therefore, the condition that each output mask word OMi' comprises only bits of different numbers is not fulfilled.

The above-condition on the result provided by the circuit PEXP can be expressed by an equation system, the resolution of which provides a great number of solutions (about 2²² solutions). The solutions can be expressed in the form of values of three first permutations, for example U2, U3, U4, as a function of a last permutation, U1. Some of these solutions are in the following:

U2 = b0//b2//b1//b3//b4//b5//b6//b7
U3 = b1//b0//b3//b2//b5//b6//b7//b4
U4 = b0//b3//b1//b2//b4//b7//b5//b6

U2 = b1//b3//b0//b6//b4//b5//b2//b7
U3 = b5//b7//b3//b0//b4//b6//b1//b2
U4 = b2//b6//b0//b3//b1//b7//b5//b4
U2 = b0//b2//b1//b4//b3//b6//b5//b7
U3 = b3//b0//b7//b1//b2//b4//b6//b5
U4 = b0//b7//b4//b1//b5//b2//b6//b3

with U1 = b0//b1//b2//b3//b4//b5//b6//b7. Each of these solutions defines the permutation functions F1, F2, F3 used in step S21. If the circuit PEXP receives the 32-bit word U1[i]//U2[i]//U3[i]//U4[i] as defined in the first solution, it provides the following 6-bit words:

b0//b7//b6//b2//b5//b4,
b5//b4//b3//b2//b1//b0,
b1//b0//b6//b7//b3//b4,
b3//b4//b0//b5//b2//b1,
b2//b1//b7//b4//b5//b6,
b5//b6//b1//b2//b0//b3,
b0//b3//b4//b7//b5//b6,
b5//b6//b1//b3//b0//b7.

It can be observed that none of the 6-bit words above contains twice (or more) the same bit of the permutation U1.

It can be noted that the protection method previously disclosed may be applied only to some operations performed in the DES algorithm which would be detected as vulnerable to side channel analysis. For example, the protection method can be applied only to the first and last rounds of the DES algorithm, from which sensitive data could leak.

The decryption according to DES algorithm comprises substantially the same operations as the encryption algorithm. Therefore, the previously described protection method can be applied to protect a program and a circuit implementing the DES decryption algorithm.

More generally, the above-described method can be applied to any other encryption or decryption algorithm comprising a bit permutation operation, such as the algorithms based on a Feistel scheme, for example Blowfish, Camellia, CAST-128, FEAL, ICE, RC5, Triple DES and Twofish.

Figure 13 represents a circuit CT2 receiving an input data X to be processed and serially performing several operations OP1, OP2, ... OPn applied to the input data X. According to an embodiment, the circuit CT2 comprises several circuits OC2 each serially performing the operations OP1, OP2, ... OPn. Each circuit OC2 receives the input data X and a respective input mask parameter u of an input mask parameter set. Thus the circuit CT2 comprises W+1 circuits OC2 respectively receiving masks equal to 0, 1 ... W, W representing the greatest possible value of the mask parameter u when considering the size in bits of the mask parameter. Each circuit OC2 comprises a circuit XG applying XOR operations to the input data X and to the mask parameter u (=0 or 1, ... or W). In each circuit OC2, the data $X \oplus u$ (u = 0, ... W) provided by the circuit XG of the circuit OC2 is applied to an input of the operation OP1 of the circuit OC2. The operations OP1-OPn are such that:

$$OPn(\ldots OP2(OP1(X \oplus u))\ldots) = CX \oplus v(u), \qquad (7)$$

where "$\oplus$" represents the XOR operator, v(u) represents an output mask parameter depending on the input mask parameter u and CX is the result of the operations OP1-OPn applied to the input data X:

$$CX = OPn(\ldots OP2(OP1(X))\ldots$$

Thus each circuit OC2 provides an output data equal to $CX \oplus v(u)$ (u=0, 1, ..., or W). Therefore, the circuit CT2 provides an output set PCX comprising the output data $CX \oplus v(0)$, $CX \oplus v(1)$, ... $CX \oplus v(u)$, ... $CX \oplus v(W)$. The operations OP1-OPn can be adapted such that the output data corresponding to the input data $X \oplus u$ provided by the operations OP1-OPn is equal to $CX \oplus v(u)$ for each value of the mask parameter u (0-W) and the set of output mask parameters v(u) with u=0 to W, is such that each output mask parameter comprises at least one first word, the first words of all the mask parameters in the output mask set having the same size and forming a subset comprising the same number of occurrences of all possible values of the words when considering the size of the output masks parameters v(u) words. Each output mask parameter v(u) can be equal to the corresponding input mask parameter u.

According to an embodiment, the computations of the output data in the output set PCX may be performed in a random order, and/or stored in a random order. To this way, the different values of the mask parameter u are respectively applied to the circuits OC2 in a random order. Thus the circuit OC2 of rank k in the circuit CT2 receives an input mask parameter u = U[k], U being a mask set generated by random permutation of all possible numbers between 0 and W. In a same way, the circuit OC2 of rank 0 in the circuit CT2 receives a mask parameter U[0], and the circuit OC2 of rank W in the circuit CT2 receives an input mask parameter U[W].

In addition, the circuits OC2 are independent from each other and the computation of each of the data CX⊕v(u) of the output set PCX is independent from the computations of the other data of the output set. Therefore the operations OP1-OPn in all the circuits OC2 can be performed in any order, provided that the order of the operations within each circuit OC2 is respected.

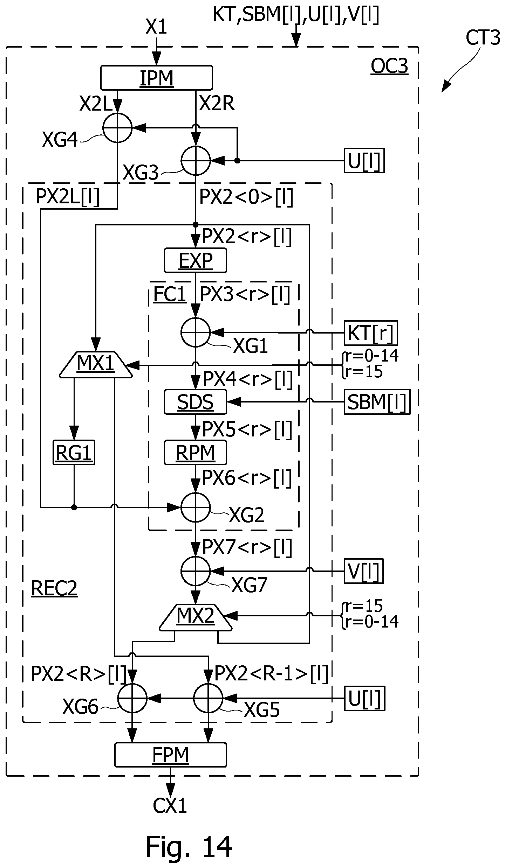

Figure 14 represents another example of a cryptographic calculation circuit CT3 implementing the DES algorithm for encrypting a data. The circuit CT3 differs from the circuit CT1 in that it has the architecture of the circuit CT2, and thus comprises W+1 circuits OC3, each receiving the input data X1 and a respective mask parameter U[I] from the mask set U. Each circuit OC3 differs from the circuit CT1 in that it processes one respective data from the data sets generated by the circuits XG3, XG4. In addition, the circuit RIPM is replaced by an initial permutation circuit IPM only performing the DES initial permutation operation. The main encryption circuit REC1 is replaced by another circuit REC2 comprising an expansion circuit EXP only performing the DES expansion operation, the circuits XG1, XG2 and SDS, the multiplexers MX1, MX2, the register RG1 and a permutation circuit RPM performing the DES round permutation operation inserted between the substitution circuit SDS and the circuit XG2. The circuit RFPM is replaced by a circuit FPM only performing the DES final permutation. Figure 14 represents only a part of the circuits XG1, XG2, SDS, MX1, MX2, RG1 and RPM belonging to one of the circuits OC3.

The circuit SDS uses masked substitution tables SBM. In addition, each circuit OC3 comprises circuits XG5, XG6, XG7 performing XOR operations with the mask parameters U[I], U[I], and mask parameter V[I] from a mask table V, respectively. The circuits XG5, XG6 are interposed between the multiplexers MX1, MX2, respectively, and the circuit FPM. The circuit XG7 is interposed between the circuit XG2 and the multiplexer MX2. The circuits XG3 and XG4 of all the circuits OC3 provide 32-bit word input sets PX2<0> and PX2L from the output data X2L, X2R provided by the circuit IPM. The circuits EXP of all circuits OC3 provide a 48-bit word output set PX3<r> from the output set PX2<r>, r being the DES round number, from 0 to R. The circuits XG1 of all circuits OC3 provide the 48-bit word output set PX4<r> from the output set PX3<r>. The circuits SDS of all circuits OC3 provide the 32-bit word output set PX5<r> from the output set PX4<r>. The circuits RPM of all circuits OC3 provide the 32-bit word output set PX6<r> from the output set PX5<r>. The circuits XG2 of all circuits OC3 provide the 32-bit word output set PX7<r> from the output set PX6<r> and the set PX2L (at the first round) or the output set PX2<r-1> stored in the register RG1 (at the other rounds). Finally, the circuits XG7 of all circuits OC3 provides the 32-bit word output set PX2<r+1> from the output set PX7<r>. The circuits XG5 of all circuits OC3 remove the mask U[I] from the data PX2[I]<R-1>, and the circuits XG6 remove the mask parameter U[I] from the data PX2[I]<R>.

According to an embodiment, the mask table U in input of the circuit CT3 comprises W+1 32-bit words, each being obtained by concatenating four bytes U1[I], U2[I], U3[I], U4[I] (U[I] = U1[I]//U2[I]//U3[I]/ /U4[I], for each integer number I between 0 and W=255), U1, U2, U3, U4 being four permutations of W+1 bytes, such that:

$$U2 = F1(U1),$$
$$U3 = F2(U1), \text{ and}$$
$$U4 = F3(U1), \tag{8}$$

F1, F2, F3 being 8-bit functions, such that each of the 48-bit words EXP(U[I]) provided by the circuit EXP applied to each of the 32-bit words U[I] (I = 0 to W), comprises eight six-bits words, each comprising only once bits of the 8-bit word U1[I]. In other words, the transformed set EXP(U) obtained by applying the expansion function EXP to the mask set U has the form of a table of (W+1)(W3+1) 6-bit words, each column of (W+1) 6-bit words comprising four (4) occurrences of each possible value (0 to 63) of a 6-bit word.

As illustrated in Figure 12, the circuit XG1 combines each 6-bit word P3[k.I] (I = 0 to X=255) of the column P3k with a respective part KT[r][k], of 6 bits of the 48-bit round key KT[r], and provides a column P4k of the output set PX4<0> of W+1 6-bit words P4k.I, comprising four (4) occurrences of each possible value encoded on six (6) bits ($4 \times 2^6 = 256$).

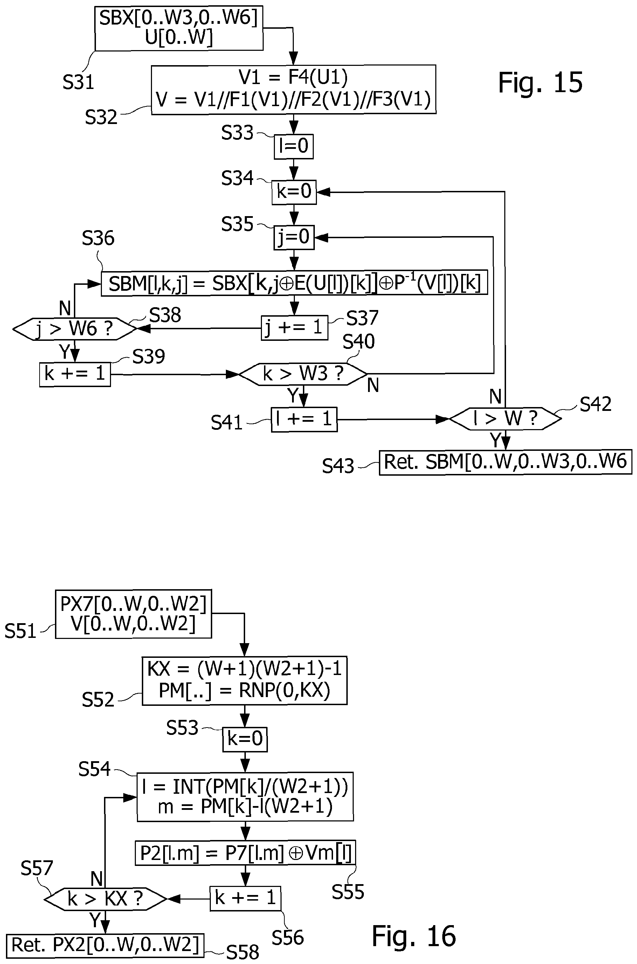

The masked substitution tables SBM are generated by executing the procedure of Figure 15, for example. The procedure of Figure 15 comprises steps S31 to S43. Steps S31 to S38 are first successively carried out. At step S31, the procedure receives the DES substitution tables SBX and the mask set U. The substitution tables SBX comprise W3+1 (= 8) substitution tables SBX[0..W3, 0..W6] each comprising W6+1 (=64) 4-bit words. At step S32, a mask set V is computed. The mask set V comprises W+1 32-bit mask parameters each being formed of four bytes V1[I], V2[I], V3[I], V4[I], (I=0 to W), V1, V2, V3, V4 being permutations of W+1 bytes (comprising a single occurrence of each possible value of one byte).

According to one embodiment, the permutation V1 is generated by applying a function F4 to the permutation U1. The function F4 is selected such that the permutation Z1 formed of the bytes U1[I]⊕F4(U1[I]) with I = 0 to W, also forms a permutation of W+1 bytes comprising a single occurrence of each possible value of one byte. The function F4 is further selected such that the set $P^{-1}$(V[I]) resulting from the application of an inverse $P^{-1}$ of the DES round permutation operation performed by the circuit RNP applied to the mask parameters V[I] of the set V, comprises a single occurrence of each possible value of one byte. The permutation V1 can be defined from the permutation U1, using the equations (10) or (11), considering that V0 = F4(U0). The permutations V2, V3 and V4 are computed using the permutations functions F1, F2, F3 used to compute the permutations U2, U3, U4. Thus:

$$V2 = F1(V1),$$
$$V3 = F2(V1), \text{ and}$$
$$V4 = F3(V1). \tag{9}$$

The permutation U1 and the permutation functions F1, F2, F3 are further selected such that each of the 32-bit words RNP(V[I]) provided by the inverse $P^{-1}$ of the operation performed by the circuit RNP applied to each of the 32-bit words V[I] (I = 0 to W), comprises eight 4-bits words, each comprising only once bits of the 8-bit word V1[I]. In other words, the transformed set $P^{-1}$(V) has the form of a table of (W+1)(W3+1) 4-bit words, each column of (W+1) 4-bit words comprising sixteen (16) occurrences of each possible value (0 to 15) of a 4-bit word.

According to an embodiment, one or several pairs (U0, V0) of mask tables U1 and V1 (such as V0 = F4(U0)) are stored in the circuit CT3, each pair (U0, V0) being tested as providing a table Z comprising values Z[I] = U0[I]⊕V0[I] for I = 0 to W, and comprising a single occurrence of all possible values of a word having the size of the masks parameters U1[I] or V1[I] (one byte in the present example). The circuit CT3 is configured to use as mask tables U1, V1, derived pairs of mask tables (u2, v2) computed as follows:

$$u2[I] = PM(u1[I] \oplus UR)$$
$$v2[I] = PM(v1[I] \oplus VR), \tag{10}$$

or

$$u2[I] = PM(u1[I]) \oplus UR$$
$$v2[I] = PM(v1[I]) \oplus VR, \tag{11}$$

for each index I between 0 and W, where UR and VR are random words of the size of any of the masks parameters U0 or V0, u1 and v1 are previously computed tables obtained by the equations (10) or (11), or equal to U0 and V0 respectively, and PM is a randomly selected permutation applied to the elements of the tables u1 and v1. It can be proved that each pair (u2, v2) computed using the equations (10) or (11) has the property of providing a table Z (Z[I] = u2[I]⊕v2[I]) comprising the same number of occurrences of all possible values of a word having the size of the masks parameters U1[I] or V1[I]. Then the permutation u2 is chosen for the permutation U1, and the permutation v2 is chosen for the permutation V1.

At step S33, an index I is initialized to zero (0). At step S34, an index k is initialized to zero (0). At step S35, an index j is initialized to zero (0). At step S36, one element of the masked table SBM is computed using the following equation:

$$SBM[I,k,j] = SBX[k,j \oplus E(U[I][k]] \oplus P^{-1}(V[I])[k] \tag{12}$$

where SBX[k] represents the DES substitution table of rank k (with k = 0 to W3=7), each table SBX[k] comprising 64 4-bit words which can be selected using 6-bit indexes, E(U[I]) represent a 48-bit word resulting from the DES expansion operation performed by the circuit EXP, applied to the mask parameter U[I], E(U[I])[k] represents a 6-bit word of rank k in the 48-bit word E(U[I]), $P^{-1}$(V[I]) represents a 32-bit word resulting from an inverse of the DES round permutation operation performed by the circuit RNP applied to the mask parameter V[I], and $P^{-1}$(V[I])[k] represents a 4-bit word of rank k in the 32-bit word $P^{-1}$(V[I]). At step S37, the index j is incremented by one (1). At step S38, the index j is compared with a maximum value W6 which is equal to $2^6$-1 (=63). If the index j is greater than the value W6, steps S39 and S40 are executed, otherwise steps S35 to S38 are executed again for a new iteration. At step S39, the index k is incremented by one (1). At step S40, the index k is compared with a maximum value W3 which is equal to $2^3$-1 (=7). If the index k is greater than the value W3, steps S41 and S42 are executed, otherwise steps S35 to S40 are again executed for a new iteration. At step S41, the index I is compared with the maximum value W which is equal to $2^8$-1 (=255). If the index I is greater than the value W, step S43 is executed, otherwise steps S34 to S42 are again executed for a new iteration. At step S43, the masked substitution tables SBM[0..W,0..W3] are provided as a result of steps S31 to S42.

Thus, the substitution operation realized by the circuit SDS is performed using a different masked substitution table SBM[I,k] for each word P4[I,k], for all values of I between 0 and W, and for all values of k between 0 and W3. Thanks to the use of the above-defined mask tables U and V, the output set PX5<r> in output of the circuit SDS comprises W3+1 (=8) columns P5k of 16 occurrences of each of the 16 possible 4-bit word values. The permutation operation performed by the circuit RPM provides an output set PX6 comprising 4(W+1) 8-bit words. Thanks to the use of the above-defined masked substitution tables SBM, and the mask table V, each byte column of the output set PX6 also comprises one occurrence of each of the 256 possible byte values. It can be observed that the above-definition of the mask tables U et V enables the protection of a bit permutation operation either expansive such as the operation performed by the circuit EXP, or not expansive as the operation performed by the circuit RPM.

Then, the circuit XG2 combines the output set PX6<r> with the output set PX2<r-1 >, by applying XOR operations to each data PX6<r>[I] and to the corresponding data PX2<r-1>[I] at the same index I. The circuit XG2 can apply XOR operations byte per byte to the data PX6<r>[I] and PX2<r-1>[I]. Thanks to the use of the function F4 to define the mask parameter bytes V1[I] from the mask parameter bytes U1[I], and the use of the functions F1, F2, F3 to define the other bytes U2[I], U3[I], U4[I], V2[I], V3[I], V4[I], each 32-bit word of the output set PX7<r> provided by the circuit XG2 is masked by the mask parameter combination U[I]⊕V[I], the mask parameters U[I] coming from the words of the output set PX2<r-1> and the mask parameters V[I] coming from the words of the output set PX6<r>. In addition, each byte column of the output set PX7<r> comprises a single occurrence of all possible byte values. The circuit XG7 removes the masks V[I] from the output set PX7<r> to provide the output set PX2<r+1> by performing XOR operations applied to 4-bit words. An example of the procedure performed by the circuit XG7 is illustrated in Figure 16. In this example, all XOR operations are performed in a random order. The procedure of Figure 16 comprises steps S51 to S58. Steps S51 to S57 are first successively carried out. At step S51, the mask table V and the output set PX7 are input. The output set PX7 comprises bytes P7[0,0], ... P7[W,W2] (W2 = $2^2$-1 = 3) and the mask table V which comprises W 32-bit masks parameters V[0], ... V[W], is considered as a table of (W+1)(W2+1) bytes. At step S52, a permutation PM in the form of a table is randomly generated using the function RNP, the permutation PM comprising (W+1)(W2+1) values between 0 and a maximum value KX=(W+1)(W2+1)-1, where W+1 is the number (=256) of 32-bit words in the tables PX7 and V (W is also the greatest value in these tables). At step S53, an index k is initialized to zero (0). At step S54, indexes I and m are computed from the index k by considering that the permutation PM is a two-entry table comprising rows of W2+1 elements and columns of W+1 elements. Thus the index I can be computed as being the integer part INT() of the division of the value PM[k] by (W2+1), and the index m can be computed as being the difference between the value PM[k] and the product of the index I by (W2+1). Step S55 computes the output word P2[I.m] at indexes I and m in the output set PX2 by combining by XOR operations the input word P7[I.m] at indexes I and m randomly selected in the input set PX7 with the mask parameter Vm[I] at index I randomly selected in the mask table V, using the random permutation PM (P2[I.m] = P7[I.m]⊕Vm[I]), Vm[I] representing the byte m in the 32-bit mask parameter V[I]. At step S56, the index k is incremented by one (1). At step S57, the index k is compared with the maximum value KX. If the index k is greater than the value KX, step S58 is carried out, otherwise steps S54 to S57 are again carried out for a new iteration. At step S58, the output set PX2 is completely defined and provided as output of steps S51 to S57.

It can be observed that such a permutation PM can be also used by the other circuits of the circuits OC3, such as XG1, XG2, RPM to process and/or store the different words in the processed data sets in a random order. The generation and use of the permutation PM can be omitted if the data in the table PX2 may be computed and/or stored in a deterministic order. In addition, the large and costly permutation PM can be replaced by two permutations of W+1 elements and W2+1 (= 4) elements, respectively, the elements of which are read within two nested loops, one for selecting an element of a first one of the two permutations and, one for selection an element of the other one of the two permutations.

The computation of the substitution masked tables can also be performed in a random order by using one or several random permutations.

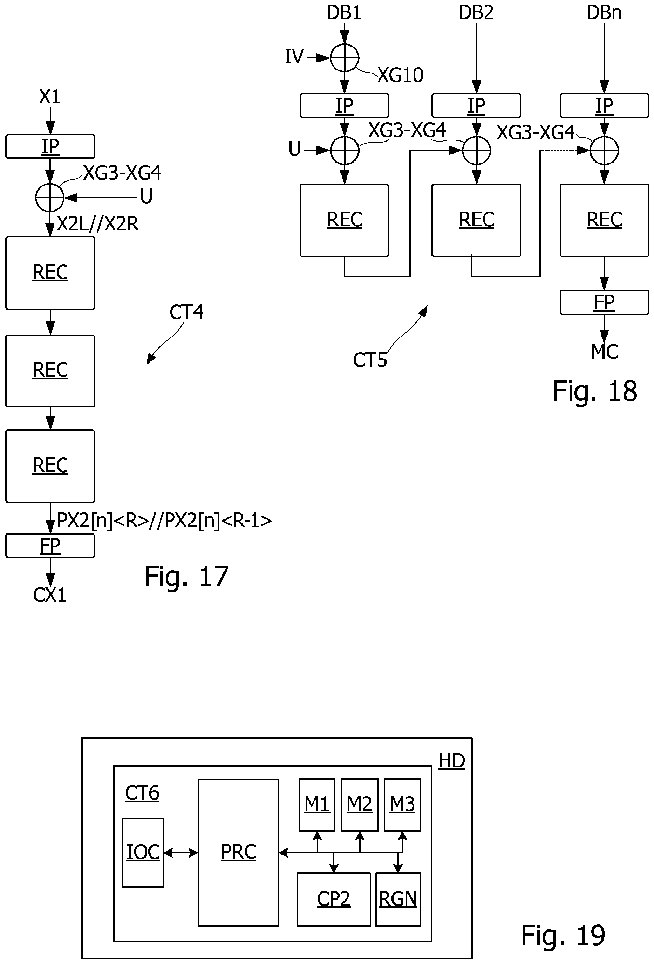

Figure 17 represents a circuit CT4 implementing the Triple DES algorithm, protected according to an embodiment. The circuit CT4 comprises in series a circuit IP performing the DES initial permutation, several main encryption circuits REC, a circuit FP performing the DES final permutation, and the circuits XG3 and XG4 inserted between the circuit IP and a first of the circuits REC. The circuits IP, REC and FP can be for example the circuits PIPM, REC1 and PFPM of Figure 5, or the circuits IPM, REC2, FPM of Figure 14. The circuit FP receives the input data X1. The circuits XG3, XG4 introduce the mask set U in the processing by generating the input data sets X2L, X2R. The last circuit REC provides a final output data PX2[I]<R>// PX2[I]<R-1> to the circuit FP which provides the output encrypted data CX1.

Between two circuits REC, one of the two circuits REC provides an intermediary output set PX2<R>// PX2<R-1> of 64-bit data PX2[I]<R>// PX2[I]<R-1> which is processed first by the expansion circuit PEXP or EXP of the next circuit REC, without having to remove the masks of the intermediary output set or extract the output data. Thus the whole process is protected from the circuits XG3, XG4 to the circuit FP.

Figure 18 represents a circuit CT5 implementing a block cipher-based message authentication code algorithm such as CMAC (Cipher-based Message Authentication Code) based on the DES algorithm. The circuit CT5 comprises several stages, each comprising a circuit IP implementing the DES initial permutation, circuits XG3, XG4, and a main encryption circuit REC implementing the DES or Triple DES algorithm. The circuits IP, REC and FP can be for example the circuits PIPM, REC1 and PFPM of Figure 5, or the circuits IPM, REC2, FPM of Figure 14.

A first stage comprises a circuit XG10 performing XOR operations combining a 64-bit initial value IV with a first input data bloc DB1 of 64 bits. A final stage comprises the circuit FP receiving the data provided by the circuit REC of the final stage, and providing an output data MC. Both the circuits XG3, XG4 of the first stage receive the mask set U. The output data provided by the circuit REC of the first stage is provided to an input of the circuits XG3, XG4 of a next stage, the circuit XG3 receive the right part of the output data and the circuit XG4 receiving the left part of the output data. The circuit IP of the next stage receives another data block DB2, ...DBn. The final stage comprises circuit FP receiving a 64-bit output data from the circuit REC of the final stage, and providing an output data MC.

Figure 19 represents an integrated circuit CT6 arranged on a portable medium HD such as a plastic card, and implementing one of the protection methods previously described, according to one embodiment. The integrated circuit comprises the same units as the integrated circuit CT described above in connection with Figure 1, and differs from the latter in that the coprocessor CP1 is replaced with a coprocessor CP2 implementing one and/or the other protection methods described above, for example in the form of the circuit CT1, CT2, CT3, CT4 or CT5. Therefore, according to one embodiment, the coprocessor CP2 is configured to provide output tables of resulting data, rather than a single data of a cryptographic operation, each output table including the expected result of the cryptographic operation, the output table being such that all data in the output table comprises at least one first word, the first words in the output table having the same size and comprising the same number of occurrences of all possible values of the first words. The processor PRC can be configured to have access to the mask table V. Thus the processor PRC can deduce the output data from the output set by combining any one of the data in the output set by one mask parameter in the mask table V or U, the selected data having a same rank in the output set as the mask parameter selected in the mask table V or U.

The coprocessor CP2 may also be configured to execute a part of the cryptographic operation. In this case, the processor PRC is configured to produce output sets of resulting data including the result of the cryptographic operation, each output set being such that all data in it have at least one first word, the first words of all data of the output set having the same size and forming a subset comprising a same number of occurrences of all possible values of the first words.

The methods disclosed herein may also be implemented by software programs executable by a computer system. Further, implementations may include distributed processing and parallel processing, especially for processing in parallel several or all data in the input data sets and/or for providing in parallel several or all data in the output data sets.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

Further, the disclosure and the illustrations are to be considered as illustrative rather than restrictive. The scope of protection is defined by the subject matter of the independent claims. Thus, the scope of the following claims is to be determined by the broadest permissible interpretation of the claims and their equivalents, and shall not be restricted or limited by the foregoing description.

References cited

[1] P. C. Kocher, "Timing attacks on implementations of Diffie-Hellman, RSA, DSS, and other systems" In Neal Koblitz, editor, Advances in Cryptology - CRYPTO '96, volume 1109 of Lecture Notes in Computer Science, p. 104-113. Springer, 1996.

[2] P. C. Kocher, J. Jaffe, and B. Jun, "Differential Power Analysis" In M. J. Wiener, editor, Advances in Cryptology - CRYPTO '99, volume 1666 of Lecture Notes in Computer Science, p. 388-397. Springer, 1999.

[3] E. Brier, C. Clavier, and F. Olivier, "Correlation Power Analysis with a Leakage Model" In M. Joye and J-J.

Quisquater, editors, Cryptographic Hardware and Embedded Systems - CHES 2004, volume 3156 of Lecture Notes in Computer Science, p. 16-29. Springer, 2004.

[4] J.-J. Quisquater, "ElectroMagnetic Analysis (EMA): Measures and Counter-measures for Smart Cards", Smart Card Programming and Security, Springer Berlin / Heidelberg, vol. 2140, 2001, p. 200-210

[5] S. Chari, J. R. Rao, and P. Rohatgi, "Template Attacks", Kaliski Jr., B.S., Koç, Ç.K., Paar, C. (eds.) CHES 2002. LNCS, vol. 2523, p. 172-186. Springer, Heidelberg (2003)

[6] B. Gierlichs, L. Batina, P. Tuyls, and B. Preneel, "Mutual Information Analysis", CHES 2008, volume 5154 of LNCS, p. 426-442, Springer, 2008

[7] Daesung Kwon et al., "New Block Cipher: ARIA", Information Security and Cryptology - ICISC 2003, Volume 2971 of the series Lecture Notes in Computer Science p. 432-445

**Claims**

1. A method for executing a requested operation by a circuit (CT, CT1), the method comprising:

   generating an input mask set (U) comprising input mask parameters (U[I]);
   generating an input set (PX, PX1) comprising data resulting from the combination of an input data (X) of the requested operation with each input mask parameter of the input mask set by Exclusive OR, XOR, operations ($\oplus$); and
   providing as an output of the requested operation an output set (PR) comprising data resulting from the application of the requested operation to each data in the input set,
   wherein the requested operation is a bit permutation operation (OPR, PEXP, EXP, RPM) whereby bits of the input data (X) are mixed to obtain an output data comprising at least two words, the input mask set comprising one word column (Ui) per word of the input data, each word column of the input mask set comprising a same number of occurrences of all possible values of one input data word in relation to a size of the input data words, each data in the output set corresponding with a respective input mask parameter of the input mask set and being equal to a corresponding output mask parameter belonging to an output mask set, combined by XOR operations with an output data resulting from the application of the requested operation to the input data, each output mask parameter being equal to the application of the requested operation to the corresponding input mask parameter, the input mask set being generated to fulfill the condition that the output mask set comprises columns of output mask words, each output mask word column comprising a same number of occurrences of all possible values of the output mask words in relation to a size of the output mask words, the condition being fulfilled when each of the words of each mask parameter in the output mask set comprises less than twice a same bit rank from the words of one word column of the input mask set.

2. The method of claim 1, wherein the generation of the input mask set (U) comprises:

   generating a first word column (U1) of the input mask set, comprising a single occurrence of all possible values of a word of the first word column in relation to a size of the word of the first word column; and
   computing each other column (U2-U4) of the first mask set by applying a respective bit permutation function (F1, F2, F3) to each of the words (U1[I]) of the first column, the bit permutation functions being defined such that the application of the requested operation to each mask parameter in the input mask set produces output mask words each comprising less than twice a same bit rank from the words of the first word column.

3. The method of claim 2, wherein the input word column (U1) of the mask set (U) is randomly generated.

4. The method of one of claims 1 to 3, wherein the bit permutation operation (PEXP, EXP) comprises duplicating bits of the input data (PX, PX2).

5. A method for encrypting or decrypting an input data (X1) according to a cryptographic algorithm comprising a bit permutation operation (PEXP, EXP, RPM), wherein the bit permutation operation is performed according to the method of one of claims 1 to 4.

**6.** The method of claim 5, wherein the cryptographic algorithm conforms with the Data Encryption Standard, DES, algorithm, the bit permutation operation comprising a DES reverse permutation operation combined with a DES bit expansion operation (PEXP).

**7.** The method of claim 5, wherein the cryptographic algorithm conforms with the Data Encryption Standard, DES algorithm and comprises successively:

a first bit permutation operation comprising a DES bit expansion operation (EXP), and performed using the first mask set (U),
a substitution operation (SDS) performed using masked substitution tables (SBM), each substitution table using as an input mask one mask parameter of the first mask set transformed by the first bit permutation operation, and as an output mask, a corresponding mask parameter of a second mask set (V), transformed by a second bit permutation operation, and
the second bit permutation operation which comprises a DES round permutation operation (RNP), and being performed using the second mask set, the first mask set being generated such that an output set of the first bit permutation operation comprises columns of words, each column comprising a same number of occurrences of all possible values of the output set words in relation to a size of the output set words, the second mask set being generated such that:

when combined by XOR operations with respective first masks of the first mask set, the second mask set provides a mask output set (U $\oplus$ V) wherein each columns of the output set comprises a single occurrence of all possible values of a word of the mask output word column in relation to a size of the word of the masked output word column, and
an inverse ($P^{-1}$) of the second bit permutation operation (RNP) provides an output set ($P^{-1}$ (V)) comprising columns of words, each column comprising a same number of occurrences of all possible values of one output set word in relation to a size of the output set word.

**8.** The method of claim 7, wherein the generation of the first and second mask sets (U,V) comprises:

generating a first word column (U1) of the first mask set, comprising a single occurrence of all possible values of a word of the first word column in relation to a size of the word of the first word column;
computing a first word columns (V1) of the second mask set, by applying a first function (F4) to the first word column of the first mask set;
computing each other column (U2-U4, V2-V4) of the first mask set and the second mask set, by applying respective second bit permutation functions (F1, F2, F3) to each of the words (U1[I]) of the first column of the first mask set, and of the first column of the second mask set, the bit permutation functions being defined such that:

the first bit permutation operation (EXP) applied to the first mask set, provides a first mask output set comprising columns of words, each comprising a same number of occurrences of all possible values of one word of the first mask output set column in relation to the size of the word of the first mask output set column,
the second bit permutation operation (RNP) applied to the second mask set, provides a second mask output set comprising columns of words, each comprising a same number of occurrences of all possible values of one word of the second mask output set column in relation to the size of the word of second mask output set column,
a combination by XOR operations of each word column of the first mask set with a respective word column of the second mask set, provides a resultant column comprising a single occurrence of all possible values of one word of the resultant column in relation to a size of the word of the resultant column.

**9.** The method of claim 6, comprising an operation (XG2) combining by XOR operations a first and a second round data to provide a round output data (X1 $\oplus$ X2), the operation being applied to combine each data of a first round set including the first round data, with each data of a second round set comprising the second round data at a same rank, the first and second round sets comprising word columns, each word column comprising a same number of occurrences of all possible values of one word of the word column in relation to the size of the word of the word column, an output set of the operation being arranged in rows and columns, each row or column comprising output data resulting from the application of the operation to a same one data of one of the first or second input set (PX1, PX2) and to all data of the other of the first and second input set, the method comprising selecting a data column (PR2) of the output set comprising the round output data, the data column comprising word output columns, each output column comprising a same number of occurrences of all possible values of one word of the word output column, in relation to the size of the word in the word output column.

10. A circuit (CT1, CT2, CT3) comprising a processor (PRC) and configured to implement the method according to one of claims 1 to 9.

11. The circuit of claim 10, comprising one circuit (OC, OC1) performing a substitution operation for each masked substitution table (SBM[m]).

12. The circuit of claim 11, comprising a coprocessor (CP1, CP2).

13. A device comprising a circuit according to claim 10 to 12, arranged on a medium (HD).

14. A computer program product loadable into a computer memory and comprising code portions which, when carried out by a computer, configure the computer to carry out the steps of the method according to one of claims 1 to 9.


**Patentansprüche**

1. Verfahren zum Ausführen einer angeforderten Operation durch eine Schaltung (CT, CT1), wobei das Verfahren Folgendes umfasst:

   Erzeugen eines Eingabemaskensatzes (U), der Eingabemaskenparameter (U[I]) umfasst;
   Erzeugen eines Eingabesatzes (PX, PX1), der Daten umfasst, die aus der Kombination von Eingabedaten (X) der angeforderten Operation mit jedem Eingabemaskenparameter des Eingabemaskensatzes durch Exklusive OR(XOR)-Operationen ($\oplus$) resultieren; und
   Bereitstellen, als eine Ausgabe der angeforderten Operation, eines Ausgbesatzes (PR), der Daten umfasst, die aus der Anwendung der angeforderten Operation auf alle Daten in dem Eingabesatz resultieren, wobei die angeforderte Operation eine Bitpermutationsoperation (OPR, PEXP, EXP, RPM) ist, wodurch Bits der Eingabedaten (X) gemischt werden, um Ausgabedaten zu erhalten, die wenigstens zwei Wörter umfassen, wobei der Eingabemaskensatz eine Wortspalte (Ui) pro Wort der Eingabedaten umfasst, wobei jede Wortspalte des Eingabemaskensatzes eine gleiche Anzahl von Auftritten der gesamten möglichen Werte eines Eingabedatenworts in Bezug auf eine Größe der Eingabedatenwörter umfasst, wobei alle Daten in dem Ausgabesatz einem jeweiligen Eingabemaskenparameter des Eingabemaskensatzes entsprechen und gleich einem entsprechenden Ausgabemaskenparameter sind, der zu einem Ausgabemaskensatz gehört, kombiniert durch XOR-Operationen mit Ausgabedaten, die aus der Anwendung der angeforderten Operation auf die Eingabedaten resultieren, wobei jeder Ausgabemaskenparameter gleich der Anwendung der angeforderten Operation auf den entsprechenden Eingabemaskenparameter ist, wobei der Eingabemaskensatz erzeugt wird, um die Bedingung zu erfüllen, dass der Ausgabemaskensatz Spalten von Ausgabemaskenwörtern umfasst, wobei jede Ausgabemaskenwortspalte eine gleiche Anzahl von Auftritten der gesamten möglichen Werte der Ausgabemaskenwörter in Bezug auf eine Größe der Ausgabemaskenwörter umfasst, wobei die Bedingung erfüllt ist, wenn jedes der Wörter jedes Maskenparameters in dem Ausgabemaskensatz weniger als zweimal einen gleichen Bitrang aus den Wörtern einer Wortspalte des Eingabemaskensatzes umfasst.

2. Verfahren nach Anspruch 1, wobei die Erzeugung des Eingabemaskensatzes (U) Folgendes umfasst:

   Erzeugen einer ersten Wortspalte (U1) des Eingabemaskensatzes, die einen einzelnen Auftritt der gesamten möglichen Werte eines Worts der ersten Wortspalte in Bezug auf eine Größe des Worts der ersten Wortspalte umfasst; und
   Berechnen jeder anderen Spalte (U2-U4) des ersten Maskensatzes durch Anwenden einer jeweiligen Bitpermutationsfunktion (F1, F2, F3) auf jedes der Wörter (U1[I]) der ersten Spalte, wobei die Bitpermutationsfunktionen derart definiert sind, dass die Anwendung der angeforderten Operation auf jeden Maskenparameter in dem Eingabemaskensatz Ausgabemaskenwörter produziert, die jeweils weniger als zweimal einen gleichen Bitrang aus den Wörtern der ersten Wortspalte umfassen.

3. Verfahren nach Anspruch 2, wobei die Eingabewortspalte (U1) des Maskensatzes (U) zufällig erzeugt wird.

4. Verfahren nach einem der Ansprüche 1 bis 3, wobei die Bitpermutationsoperation (PEXP, EXP) ein Duplizieren von Bits der Eingabedaten (PX, PX2) umfasst.

5. Verfahren zum Verschlüsseln oder Entschlüsseln von Eingabedaten (X1) gemäß einem kryptografischen Algorithmus, das eine Bitpermutationsoperation (PEXP, EXP, RPM) umfasst, wobei die Bitpermutationsoperation gemäß dem Verfahren nach einem der Ansprüche 1 bis 4 durchgeführt wird.

6. Verfahren nach Anspruch 5, wobei der kryptographische Algorithmus mit dem Data Encryption Standard (DES)-Algorithmus übereinstimmt, wobei die Bitpermutationsoperation eine DES-umgekehrte Permutationsoperation, kombiniert mit einer DES-Bit-Erweiterungsoperation (PEXP), umfasst.

7. Verfahren nach Anspruch 5, wobei der kryptografische Algorithmus mit dem Data Encryption Standard(DES)-Algorithmus übereinstimmt und nacheinander Folgendes umfasst:

eine erste Bitpermutationsoperation, die eine DES-Bit-Erweiterungsoperation (EXP) umfasst und unter Verwendung des ersten Maskensatzes (U) durchgeführt wird,
eine Substitutionsoperation (SDS), die unter Verwendung von maskierten Substitutionstabellen (SBM) durchgeführt wird, wobei jede Substitutionstabelle als eine Eingabemaske einen Maskenparameter des ersten Maskensatzes, der durch die erste Bitpermutationsoperation transformiert wird, und als eine Ausgabemaske einen entsprechenden Maskenparameter eines zweiten Maskensatzes (V) verwendet, der durch eine zweite Bitpermutationsoperation transformiert wird, und
die zweite Bitpermutationsoperation, die eine DES-Rundenpermutationsoperation (RNP) umfasst, und unter Verwendung des zweiten Maskensatzes durchgeführt wird, wobei der erste Maskensatz derart erzeugt wird, dass ein Ausgabesatz der ersten Bitpermutationsoperation Spalten von Wörtern umfasst, wobei jede Spalte eine gleiche Anzahl von Auftritten der gesamten möglichen Werte der Ausgabesatzwörter in Bezug auf eine Größe der Ausgabesatzwörter umfasst, wobei der zweite Maskensatz derart erzeugt wird, dass:

wenn er durch XOR-Operationen mit jeweiligen ersten Masken des ersten Maskensatzes kombiniert wird, der zweite Maskensatz einen Maskenausgabesatz ($U \oplus V$) bereitstellt, wobei jede Spalte des Ausgabesatzes einen einzelnen Auftritt der gesamten möglichen Werte eines Worts der Maskenausgabewortspalte in Bezug auf eine Größe des Worts der maskierten Ausgabewortspalte umfasst, und
eine Umkehrung ($P^{-1}$) der zweiten Bitpermutationsoperation (RNP) einen Ausgabesatz ($P^{-1}$ (V)) bereitstellt, der Spalten von Wörtern umfasst, wobei jede Spalte eine gleiche Anzahl von Auftritten der gesamten möglichen Werte eines Ausgabesatzworts in Bezug auf eine Größe des Ausgabesatzworts umfasst.

8. Verfahren nach Anspruch 7, wobei die Erzeugung des ersten und des zweiten Maskensatzes (U, V) Folgendes umfasst:

Erzeugen einer ersten Wortspalte (U1) des ersten Maskensatzes, die einen einzelnen Auftritt der gesamten möglichen Werte eines Worts der ersten Wortspalte in Bezug auf eine Größe des Worts der ersten Wortspalte umfasst;
Berechnen einer ersten Wortspalte (V1) des zweiten Maskensatzes durch Anwenden einer ersten Funktion (F4) auf die erste Wortspalte des ersten Maskensatzes;
Berechnen der jeweils anderen Spalte (U2-U4, V2-V4) des ersten Maskensatzes und des zweiten Maskensatzes, durch Anwenden jeweiliger zweiter Bitpermutationsfunktionen (F1, F2, F3) auf jedes der Wörter (U1[I]) der ersten Spalte des ersten Maskensatzes und der ersten Spalte des zweiten Maskensatzes, wobei die Bitpermutationsfunktionen derart definiert sind, dass:

die erste Bitpermutationsoperation (EXP), die auf den ersten Maskensatz angewendet wird, einen ersten Maskenausgabesatz bereitstellt, der Spalten von Wörtern umfasst, die jeweils eine gleiche Anzahl von Auftritten der gesamten möglichen Werte eines Worts der ersten Maskenausgabesatzspalte in Bezug auf die Größe des Worts der ersten Maskenausgabesatzspalte umfassen,
die zweite Bitpermutationsoperation (RNP), die auf den zweiten Maskensatz angewendet wird, einen zweiten Maskenausgabesatz bereitstellt, der Spalten von Wörtern umfasst, die jeweils eine gleiche Anzahl von Auftritten der gesamten möglichen Werte eines Worts der zweiten Maskenausgabesatzspalte in Bezug auf die Größe des Worts der zweiten Maskenausgabesatzspalte umfassen,
eine Kombination, durch XOR-Operationen, jeder Wortspalte des ersten Maskensatzes mit einer jeweiligen Wortspalte des zweiten Maskensatzes eine resultierende Spalte bereitstellt, die einen einzelnen Auftritt der gesamten möglichen Werte eines Worts der resultierenden Spalte in Bezug auf eine Größe des Worts der resultierenden Spalte umfasst.

9. Verfahren nach Anspruch 6, das eine Operation (XG2) umfasst, die durch XOR-Operationen erste und zweite Rundendaten kombiniert, um Rundenausgabedaten (X1 ⊕ X2) bereitzustellen, wobei die Operation angewendet wird, um alle Daten eines ersten Rundensatzes einschließlich der ersten Rundendaten zu kombinieren, wobei alle Daten eines zweiten Rundensatzes die zweiten Rundendaten in einem gleichen Rang umfassen, wobei der erste und der zweite Rundensatz Wortspalten umfassen, wobei jede Wortspalte eine gleiche Anzahl von Auftritten der gesamten möglichen Werte eines Worts der Wortspalte in Bezug auf die Größe des Worts der Wortspalte umfasst, wobei ein Ausgabesatz der Operation in Zeilen und Spalten angeordnet ist, wobei jede Zeile oder Spalte Ausgabedaten umfasst, die aus der Anwendung der Operation auf die gleichen Daten des ersten oder des zweiten Eingabesatzes (PX1, PX2) und auf die gesamten Daten des anderen des ersten oder des zweiten Eingabesatzes resultieren, wobei das Verfahren das Auswählen einer Datenspalte (PR2) des Ausgabesatzes umfasst, der die Rundenausgabedaten umfasst, wobei die Datenspalte Wortausgabespalten umfasst, wobei jede Ausgabespalte eine gleiche Anzahl von Auftritten der gesamten möglichen Werte eines Worts der Wortausgabespalte in Bezug auf die Größe des Worts in der Wortausgabespalte umfasst.

10. Schaltung (CT1, CT2, CT3), die einen Prozessor (PRC) umfasst und konfiguriert ist, um das Verfahren nach einem der Ansprüche 1 bis 9 zu implementieren.

11. Schaltung nach Anspruch 10, die eine Schaltung (OC, OC1) umfasst, die eine Substitutionsoperation für jede maskierte Substitutionstabelle (SBM[m]) durchführt.

12. Schaltung nach Anspruch 11, die einen Coprozessor (CP1, CP2) umfasst.

13. Vorrichtung, die eine Schaltung nach Anspruch 10 bis 12 umfasst, die auf einem Medium (HD) angeordnet ist.

14. Computerprogrammprodukt, das in einen Computerspeicher geladen werden kann und Codeabschnitte umfasst, die, wenn sie durch einen Computer vorgenommen werden, den Computer konfigurieren, um die Schritte des Verfahrens nach einem der Ansprüche 1 bis 9 vorzunehmen.

## Revendications

1. Procédé d'exécution d'une opération demandée par un circuit (CT, CT1), le procédé comprenant les étapes suivantes :

générer un ensemble de masques d'entrée (U) comprenant des paramètres de masque d'entrée (U[I]) ;
générer un ensemble d'entrées (PX, PX1) comprenant des données résultant de la combinaison d'une donnée d'entrée (X) de l'opération demandée avec chaque paramètre de masque d'entrée de l'ensemble de masques d'entrée par des opérations OU exclusif, XOR, (⊕) ; et
fournir comme sortie de l'opération demandée un ensemble de sorties (PR) comprenant des données résultant de l'application de l'opération demandée à chaque donnée de l'ensemble d'entrées,
dans lequel l'opération demandée est une opération de permutation de bits (OPR, PEXP, EXP, RPM) par laquelle des bits des données d'entrée (X) sont mélangés pour obtenir des données de sortie comprenant au moins deux mots, l'ensemble de masques d'entrée comprenant une colonne de mots (Ui) par mot des données d'entrée, chaque colonne de mots de l'ensemble de masques d'entrée comprenant un même nombre d'occurrences de toutes les valeurs possibles d'un mot de données d'entrée par rapport à la taille des mots de données d'entrée, chaque donnée de l'ensemble de sorties correspondant à un paramètre de masque d'entrée respectif de l'ensemble de masques d'entrée et étant égale à un paramètre de masque de sortie correspondant appartenant à un ensemble de masques de sortie combiné par des opérations XOR avec une donnée de sortie résultant de l'application de l'opération demandée aux données d'entrée, chaque paramètre de masque de sortie étant égal à l'application de l'opération demandée au paramètre de masque d'entrée correspondant, l'ensemble de masques d'entrée étant généré pour remplir la condition selon laquelle l'ensemble de masques de sortie comprend des colonnes de mots de masque de sortie, chaque colonne de mots de masque de sortie comprenant un même nombre d'occurrences de toutes les valeurs possibles des mots de masque de sortie par rapport à une taille des mots de masque de sortie, la condition étant remplie lorsque chacun des mots de chaque paramètre de masque dans l'ensemble de masques de sortie comprend moins de deux fois un même rang de bit dans les mots d'une colonne de mots de l'ensemble de masques d'entrée.

**2.** Procédé selon la revendication 1, dans lequel la génération de l'ensemble de masques d'entrée (U) comprend les étapes suivantes :

> générer une première colonne de mots (U1) de l'ensemble de masques d'entrée, comprenant une seule occurrence de toutes les valeurs possibles d'un mot de la première colonne de mots en relation avec une taille du mot de la première colonne de mots ; et
> calculer chaque autre colonne (U2-U4) du premier ensemble de masques en appliquant une fonction de permutation de bits respective (F1, F2, F3) à chacun des mots (U1[I]) de la première colonne, les fonctions de permutation de bits étant définies de telle sorte que l'application de l'opération demandée à chaque paramètre de masque dans l'ensemble de masques d'entrée produise des mots de masque de sortie comprenant chacun moins de deux fois un même rang de bit des mots de la première colonne de mots.

**3.** Procédé selon la revendication 2, dans lequel la colonne de mots d'entrée (U1) de l'ensemble de masques (U) est générée de manière aléatoire.

**4.** Procédé selon l'une des revendications 1 à 3, dans lequel l'opération de permutation de bits (PEXP, EXP) comprend la duplication de bits des données d'entrée (PX, PX2).

**5.** Procédé de chiffrement ou de déchiffrement d'une donnée d'entrée (X1) selon un algorithme cryptographique comprenant une opération de permutation de bits (PEXP, EXP, RPM), dans lequel l'opération de permutation de bits est réalisée selon le procédé de l'une des revendications 1 à 4.

**6.** Procédé selon la revendication 5, dans lequel l'algorithme cryptographique est conforme à l'algorithme DES (Data Encryption Standard), l'opération de permutation de bits comprenant une opération de permutation DES inverse combinée à une opération DES d'expansion de bits (PEXP).

**7.** Procédé selon la revendication 5, dans lequel l'algorithme cryptographique est conforme à l'algorithme DES, et comprend successivement :

> une première opération de permutation de bits comprenant une opération DES d'expansion de bits (EXP), et réalisée en utilisant le premier ensemble de masques (U),
> une opération de substitution (SDS) effectuée en utilisant des tables de substitution masquées (SBM), chaque table de substitution utilisant comme masque d'entrée un paramètre de masque du premier ensemble de masques transformé par la première opération de permutation de bits, et comme masque de sortie, un paramètre de masque correspondant d'un deuxième ensemble de masques (V), transformé par une deuxième opération de permutation de bits, et
> la deuxième opération de permutation de bits qui comprend une opération DES de permutation circulaire (RNP), et étant effectuée en utilisant le deuxième ensemble de masques, le premier ensemble de masques étant généré de telle sorte qu'un ensemble de sortie de la première opération de permutation de bits comprend des colonnes de mots, chaque colonne comprenant un même nombre d'occurrences de toutes les valeurs possibles des mots de l'ensemble de sortie par rapport à une taille des mots de l'ensemble de sortie, le deuxième ensemble de masques étant généré de telle sorte que :

>> lorsqu'il est combiné par des opérations XOR avec des premiers masques respectifs du premier ensemble de masques, le deuxième ensemble de masques fournit un ensemble de masques de sortie (U⊕V) dans lequel chaque colonne de l'ensemble de sortie comprend une seule occurrence de toutes les valeurs possibles d'un mot de la colonne de mots de masque de sortie par rapport à une taille du mot de la colonne de mots de masque de sortie, et
>> un inverse ($P^{-1}$) de la deuxième opération de permutation de bits (RNP) fournit un ensemble de sortie ($P^{-1}(V)$) comprenant des colonnes de mots, chaque colonne comprenant un même nombre d'occurrences de toutes les valeurs possibles d'un mot de l'ensemble de sortie par rapport à une taille du mot de l'ensemble de sortie.

**8.** Procédé de la revendication 7, dans lequel la génération des premier et deuxième ensembles de masques (U, V) comprend les étapes suivantes :

> générer une première colonne de mots (U1) du premier ensemble de masques, comprenant une seule occurrence de toutes les valeurs possibles d'un mot de la première colonne de mots par rapport à une taille du mot de la première colonne de mots ;

calculer une première colonne de mots (V1) du deuxième ensemble de masques, en appliquant une première fonction (F4) à la première colonne de mots du premier ensemble de masques ;

calculer chaque autre colonne (U2-U4, V2-V4) du premier ensemble de masques et du deuxième ensemble de masques, en appliquant des deuxièmes fonctions de permutation de bits respectives (F1, F2, F3) à chacun des mots (U1[l]) de la première colonne du premier ensemble de masques, et de la première colonne du deuxième ensemble de masques, les fonctions de permutation de bits étant définies de telle sorte que :

la première opération de permutation de bits (EXP) appliquée au premier ensemble de masques fournit un premier ensemble de sortie de masques comprenant des colonnes de mots, chacune comprenant un même nombre d'occurrences de toutes les valeurs possibles d'un mot de la colonne du premier ensemble de sortie de masques par rapport à la taille du mot de la colonne du premier ensemble de sortie de masques, la deuxième opération de permutation de bits (RNP) appliquée au deuxième ensemble de masques fournit un deuxième ensemble de sortie de masques comprenant des colonnes de mots, chacune comprenant un même nombre d'occurrences de toutes les valeurs possibles d'un mot de la colonne du deuxième ensemble de sortie de masques par rapport à la taille du mot de la colonne du deuxième ensemble de sortie de masques,

une combinaison par des opérations XOR de chaque colonne de mots du premier ensemble de masques avec une colonne de mots respective du deuxième ensemble de masques, fournit une colonne résultante comprenant une seule occurrence de toutes les valeurs possibles d'un mot de la colonne résultante par rapport à une taille du mot de la colonne résultante.

9. Procédé selon la revendication 6, comprenant une opération (XG2) combinant par des opérations XOR des données d'une première et d'une deuxième ronde pour fournir une donnée de sortie de ronde (X1⊕X2), l'opération étant appliquée pour combiner chaque donnée d'un ensemble de première ronde comprenant les données de la première ronde, avec chaque donnée d'un ensemble de deuxième ronde comprenant les données de la deuxième ronde de même rang, les ensembles de première et deuxième ronde comprenant des colonnes de mots, chaque colonne de mots comprenant un même nombre d'occurrences de toutes les valeurs possibles d'un mot de la colonne de mots par rapport à la taille du mot de la colonne de mots, un ensemble de sortie de l'opération étant organisé en rangées et en colonnes, chaque rangée ou colonne comprenant des données de sortie résultant de l'application de l'opération à une même donnée de l'un des premier et deuxième ensembles d'entrée (PX1, PX2) et à toutes les données de l'autre des premier et deuxième ensembles d'entrée, le procédé comprenant la sélection d'une colonne de données (PR2) de l'ensemble de sortie comprenant les données de sortie de ronde, la colonne de données comprenant des colonnes de sortie de mots, chaque colonne de sortie comprenant un même nombre d'occurrences de toutes les valeurs possibles d'un mot de la colonne de sortie de mots, en relation avec la taille du mot dans la colonne de sortie de mots.

10. Circuit (CT1, CT2, CT3) comprenant un processeur (PRC) et configuré pour mettre en oeuvre le procédé selon l'une des revendications 1 à 9.

11. Circuit selon la revendication 10, comprenant un circuit (OC, OC1) effectuant une opération de substitution pour chaque table de substitution masquée (SBM[m]).

12. Circuit selon la revendication 11, comprenant un coprocesseur (CP1, CP2).

13. Dispositif comprenant un circuit selon l'une des revendications 10 à 12, disposé sur un support (HD).

14. Produit programme d'ordinateur chargeable dans une mémoire d'ordinateur et comprenant des parties de code qui, lorsqu'elles sont exécutées par l'ordinateur, configurent l'ordinateur pour exécuter les étapes du procédé selon l'une des revendications 1 à 9.

Fig. 1

Fig. 2

Fig. 3

Fig. 4

Fig. 5

Fig. 6

|  IPTL |||||||| IPTR ||||||||
|---|---|---|---|---|---|---|---|---|---|---|---|---|---|---|---|
| 60 | 62 | 14 | 16 | 28 | 40 | 50 | 54 | 59 | 61 | 13 | 15 | 27 | 39 | 49 | 53 |
| 6 | 4 | 24 | 18 | 56 | 38 | 52 | 58 | 5 | 3 | 23 | 17 | 55 | 37 | 51 | 57 |
| 2 | 20 | 64 | 42 | 34 | 32 | 44 | 46 | 1 | 19 | 63 | 41 | 33 | 31 | 43 | 45 |
| 8 | 36 | 22 | 10 | 26 | 48 | 12 | 30 | 7 | 35 | 21 | 9 | 25 | 47 | 11 | 29 |

IPT

PEXT

| 25 | 16 | 7 | 20 | 21 | 29 |
|---|---|---|---|---|---|
| 21 | 29 | 12 | 28 | 17 | 1 |
| 17 | 1 | 15 | 23 | 26 | 5 |
| 26 | 5 | 18 | 31 | 10 | 2 |
| 10 | 2 | 8 | 24 | 14 | 32 |
| 14 | 32 | 27 | 3 | 9 | 19 |
| 9 | 19 | 13 | 30 | 6 | 22 |
| 6 | 22 | 11 | 4 | 25 | 16 |

Fig. 7

FPT

| 49 | 17 | 42 | 10 | 41 | 9 | 57 | 25 | 60 | 28 | 63 | 31 | 35 | 3 | 36 | 4 |
|---|---|---|---|---|---|---|---|---|---|---|---|---|---|---|---|
| 44 | 12 | 50 | 18 | 59 | 27 | 43 | 11 | 61 | 29 | 37 | 5 | 64 | 32 | 54 | 22 |
| 53 | 21 | 58 | 26 | 46 | 14 | 38 | 6 | 52 | 20 | 55 | 23 | 56 | 24 | 62 | 30 |
| 39 | 7 | 47 | 15 | 40 | 8 | 45 | 13 | 48 | 16 | 33 | 1 | 34 | 2 | 51 | 19 |

Fig. 8

S21 ⌁ | U1[..] = RNP(0,W-1)
U2 = F1(U1)
U3 = F2(U1)
U4 = F3(U1) |

**Fig. 9**

S22 ⌁ | I=0 |

S23

MSK = U1[I]//U2[I]//U3[I]//U4[I]

PX2[I] = X2⊕MSK ⌁ S24

Y ⟨ I < W ? ⟩ ⌁ S26 ← | I += 1 | ⌁ S25

N

S27 ⌁ | Ret. PX1 |

---

| PX2[0.0] | PX2[0.1] | PX2[0.2] | PX2[0.3] |
|---|---|---|---|
| ⋮ | ⋮ | ⋮ | ⋮ |
| PX2[n.0] | PX2[n.1] | PX2[n.2] | PX2[n.3] |
| ⋮ | ⋮ | ⋮ | ⋮ |
| PX2[W.0] | PX2[W.1] | PX2[W.2] | PX2[W.3] |

PX2<r>,
PX2L

**Fig. 10**

P21　　P22　　P23　　P24

---

PX3<r>

| P3[0.k] |
| P3[1.k] |
| ⋮ |
| P3[n.k] |
| ⋮ |
| P3[W.k] |

P3k

**Fig. 11**

KT[j,k]

⊕ XG1

PX4<r>　　P4k

| P4[0.k] |
| P4[1.k] |
| ⋮ |
| P4[n.k] |
| ⋮ |
| P4[W.k] |

SBX[k]

SDS

P54<r>　　P5k

| P5[0.k] |
| P5[1.k] |
| ⋮ |
| P5[n.k] |
| ⋮ |
| P5[W.k] |

# Fig. 12

# Fig. 13

Fig. 14

Fig. 15

Fig. 16

Fig. 17

Fig. 18

Fig. 19

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- FR 1651443
- US 20069056622 A
- US 2009074181 A
- US 2011055591 A

## Non-patent literature cited in the description

- Timing attacks on implementations of Diffie-Hellman, RSA, DSS, and other systems. **P. C. KOCHER.** Advances in Cryptology - CRYPTO '96, volume 1109 of Lecture Notes in Computer Science. Springer, 1996, vol. 1109, 104-113
- Differential Power Analysis. **P. C. KOCHER ; J. JAFFE ; B. JUN.** Advances in Cryptology - CRYPTO '99, volume 1666 of Lecture Notes in Computer Science. Springer, 1999, vol. 1666, 388-397
- Correlation Power Analysis with a Leakage Model. **E. BRIER ; C. CLAVIER ; F. OLIVIER.** Cryptographic Hardware and Embedded Systems - CHES 2004, volume 3156 of Lecture Notes in Computer Science. Springer, 2004, vol. 3156, 16-29
- ElectroMagnetic Analysis (EMA): Measures and Counter-measures for Smart Cards. **J.-J. QUISQUATER.** Smart Card Programming and Security. Springer, 2001, vol. 2140, 200-210
- Template Attacks. **S. CHARI ; J. R. RAO ; P. ROHATGI.** CHES 2002. LNCS. Springer, 2003, vol. 2523, 172-186
- Mutual Information Analysis. **B. GIERLICHS ; L. BATINA ; P. TUYLS ; B. PRENEEL.** CHES 2008, volume 5154 of LNCS. Springer, 2008, vol. 5154, 426-442
- **DAESUNG KWON et al.** New Block Cipher: ARIA. *Information Security and Cryptology - ICISC 2003, Volume 2971 of the series Lecture Notes in Computer Science,* 2003, vol. 2971, 432-445